(19) Europäisches Patentamt
European Patent Office
Office européen des brevets

(11) **EP 3 760 995 B1**

(12) **EUROPÄISCHE PATENTSCHRIFT**

(45) Veröffentlichungstag und Bekanntmachung des Hinweises auf die Patenterteilung:
**27.09.2023 Patentblatt 2023/39**

(21) Anmeldenummer: **20181568.5**

(22) Anmeldetag: **23.06.2020**

(51) Internationale Patentklassifikation (IPC):
*G01L 21/00* (2006.01)    *G01L 21/16* (2006.01)
*G01L 21/24* (2006.01)    *G01L 27/00* (2006.01)
*G01L 21/12* (2006.01)    *G01L 21/30* (2006.01)

(52) Gemeinsame Patentklassifikation (CPC):
**G01L 21/24; G01L 21/12; G01L 21/30; G01L 27/005**

(54) **DRUCKMESSVORRICHTUNG**

PRESSURE MEASURING DEVICE

DISPOSITIF DE MESURE DE PRESSION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **25.06.2019 DE 102019117104**

(43) Veröffentlichungstag der Anmeldung:
**06.01.2021 Patentblatt 2021/01**

(73) Patentinhaber: **Ph-Instruments GmbH**
**9800 Spittal a.d. Drau (AT)**

(72) Erfinder: **HOFMANN, Peter, Dr.**
**9712 Fresach (AT)**

(74) Vertreter: **Wildhack & Jellinek**
**Patentanwälte OG**
**Landstraßer Hauptstraße 50**
**1030 Wien (AT)**

(56) Entgegenhaltungen:
**DE-A1- 19 860 500    US-A- 4 995 264**
**US-A- 5 250 906**

## Beschreibung

Die vorliegende Erfindung betrifft zunächst eine Druckmessvorrichtung sowie eine Bearbeitungsanlage mit einer solchen Druckmesseinrichtung. Weiterhin betrifft die Erfindung auch ein Verfahren zur Druckmessung mittels einer Druckmessvorrichtung. Die vorliegende Erfindung ist in bevorzugter Ausführung im Bereich der Vakuum-Prozess-Mess- und/oder -Regelung angesiedelt, jedoch nicht darauf beschränkt.

Bereits seit dem 17. Jahrhundert beschäftigt das Vakuum die Menschheit. Mittlerweile ist Vakuum nicht mehr aus der modernen Technik wegzudenken. In der Chemie beispielsweise werden Reaktionen von Stoffen im Vakuum untersucht. Die Biologie interessiert sich für die Wirkungen des Vakuums auf Organismen und Bereiche der Physik (Quantenphysik, Feldtheorie, etc.) beschäftigen sich allgemein mit Teilchen, deren Eigenschaften im luftleeren Raum genauer erforscht werden. Das Vakuum hat auch Einzug in wichtige Industrieprozesse gehalten, die ohne Vakuum nicht realisierbar wären. Als Beispiele sind die Halbleiterherstellung oder die Massenspektroskopie zu erwähnen. Auch im Bereich der Handhabungstechnik, das heißt Heben, Halten, Drehen und Transportieren von Teilen aller Art, wurden durch die Vakuumtechnologie neue Möglichkeiten entwickelt und eingesetzt. Ein weite Anwendung findet Vakuum als Isolationsmedium (thermisch oder elektrisch). Detaillierte Kenntnisse über die vorherrschenden Bedingungen im Vakuum sind beispielsweise relevant auch in der Produktions- und Fertigungstechnik zur Behandlung von Werkstoffen oder zur Handhabung in der Lebensmittelindustrie, oder in der Medizintechnik. Je nach Anwendung wird ein bestimmter Vakuumbereich zwischen dem Luftdruck der Atmosphäre von etwa 1000 hPa und einem extremen Ultrahochvakuum von $10^{-14}$ hPa eingesetzt.

Druck wird allgemein definiert als Kraft pro Flächeneinheit. Die Luft ist ein Gasgemisch, das aus vielen Partikeln in Form von Atomen und Molekülen besteht. Diese Partikel sind in ständiger Bewegung. Treffen sie irgendwo auf, so üben sie dort eine Kraft aus.

Die Druck- bzw. Vakuummessung definiert sich dadurch, dass man eine Flächeneinheit bestimmt und die Anzahl sowie die Intensität dieser Stöße auf dieser Fläche gemessen wird. Messungen sind notwendig, um definierte Bedingungen einzustellen, Vorgänge zu kontrollieren und prüfen zu können. Aus diesem Grund müssen Vakuum-Messgeräte im allgemeinen "kalibriert" sein (nicht Primärstandards). Das heißt, einzelne funktionsgleiche Messgeräte müssen so justiert sein, dass sie bei gleichen Voraussetzungen innerhalb der Spezifikationen eines jeden Messverfahrens die gleichen Messergebnisse liefern. Um das Medium Vakuum zu bewerten bzw. zu messen, gibt es verschiedene technische Einrichtungen, die für Anwendungen in Industrie und Forschung unerlässlich sind.

Die Vakuumtechnologie als solche ist bereits seit langem bekannt. Zur Messung der Druckverhältnisse im Vakuum stehen in der Praxis unterschiedliche Verfahren zur Verfügung, die sich in Ihren Anwendungseigenschaften deutlich unterscheiden. Vakuum lässt sich in unterschiedliche Bereiche einteilen. Grobvakuum (GV) bezeichnet einen Druckbereich zwischen Umgebungsdruck und 1 mbar. Feinvakuum (FV) bezeichnet den Bereich zwischen 1 mbar und $10^{-3}$ mbar. Unter Hochvakuum (HV) versteht man den Bereich zwischen $10^{-3}$ mbar und $10^{-8}$ mbar. Ultrahochvakuum (UHV) ist der Bereich zwischen $10^{-8}$ mbar und $10^{-13}$ mbar.

Im Stand der Technik sind bereits Lösungen bekannt geworden, bei denen unterschiedliche Typen von Druckmesseinrichtungen kombiniert werden, um ein kombiniertes Drucksignal zu erhalten. Eine solche Lösung ist in der EP 0 379 841 A2 beschrieben, in der ein Druckmessverfahren mittels Gasreibungsmanometer mit einem Druckmessverfahren mittels einer Pirani-Druckmesseinrichtung kombiniert werden.

Aufgabe der vorliegenden Erfindung ist es, eine Messung in weiten Druckereichen mit möglichst genauen, reproduzierbaren und langzeitstabilen Druckmesswerten zu realisieren.

Diese Aufgabe wird erfindungsgemäß gelöst durch die Druckmessvorrichtung mit den Merkmalen gemäß dem unabhängigen Patentanspruch 1, welche den ersten Erfindungsaspekt darstellt, durch die Bearbeitungsanlage mit den Merkmalen gemäß dem unabhängigen Patentanspruch 7, welche den zweiten Erfindungsaspekt darstellt, sowie durch das Verfahren zur Druckmessung mit den Merkmalen gemäß dem unabhängigen Patentanspruch 10, welches den dritten Erfindungsaspekt darstellt.

Weitere Merkmale und Details der Erfindung ergeben sich aus den Unteransprüchen sowie aus der Beschreibung und den Zeichnungen. Merkmale und Details, die im Zusammenhang mit einem der Erfindungsaspekte beschrieben sind, gelten hinsichtlich ihrer Offenbarung dabei selbstverständlich auch im Zusammenhang mit den jeweils anderen Erfindungsaspekten, so dass die Offenbarung zu einem Erfindungsaspekt stets vollumfänglich auch eine Offenbarung zu den jeweils anderen Erfindungsaspekten darstellt.

Die vorliegende Erfindung ist zunächst auf eine Druckmessvorrichtung gerichtet. Dabei ist die Erfindung nicht auf die Messung bestimmter Druckbereiche und die Größe bestimmter Druckmesswerte beschränkt.

Eine Druckmessvorrichtung ist insbesondere eine Vorrichtung, mittels derer ein Druck, insbesondere die Druckverhältnisse ermittelt, beispielsweise gemessen oder bestimmt, werden. Die Druckmessvorrichtung weist eine Anzahl unterschiedlicher Komponenten auf, die im weiteren Verlauf der Beschreibung erläutert werden.

Die Druckmessvorrichtung der vorliegenden Erfindung kann auf unterschiedliche Weise ausgestaltet beziehungsweise realisiert sein.

In einer ersten bevorzugten Ausführungsform ist die Druckmessvorrichtung in Form einer körperlichen Entität ausgebildet. Unter einer Entität ist dabei eine Einheit zu verstehen. Eine körperliche Entität stellt eine physische Einheit dar. Alle Komponenten stellen somit in Bezug auf die Druckmessvorrichtung interne Komponenten dar. Das bedeutet insbesondere, dass alle Komponenten innerhalb eines Gehäuses angeordnet oder ausgebildet sind.

In einer anderen bevorzugten Ausführungsform ist die Druckmessvorrichtung teilweise in Form einer körperlichen Entität und teilweise in Form einer funktionalen Entität ausgebildet. Eine funktionale Entität zeichnet sich insbesondere dadurch aus, dass die Komponenten räumlich voneinander getrennt sind und sich die Einheit durch die funktionale Zusammenwirkung der einzelnen Komponenten ergibt. In diesem Fall handelt es sich nur bei einer Untergruppe der Komponenten um interne Komponenten im Sinne der ersten bevorzugten Ausführungsform. Wenigstens eine Komponente der Druckmessvorrichtung ist als eine dazu externe Komponente ausgebildet.

In einer weiteren bevorzugten Ausführungsform ist die Druckmessvorrichtung als reine funktionale Entität ausgebildet. Das bedeutet, dass alle Komponenten jeweils als eigenständige räumlich voneinander getrennte Komponenten ausgebildet sind. Jedoch stehen die einzelnen Komponenten zur Realisierung der Druckmessvorrichtung in geeigneter Weise funktional miteinander in Verbindung.

Bevorzugte Ausführungsbeispiele zu den verschiedenen Ausführungsformen werden im weiteren Verlauf der Beschreibung, insbesondere auch im Zusammenhang mit den Figuren in der Figurenbeschreibung, in größerem Detail beschrieben.

In einer bevorzugten Ausführungsform, an der das Wesen der vorliegenden Erfindung exemplarisch sowie den Schutzumfang nicht beschränkend erläutert wird, ist die Druckmessvorrichtung als Vakuum-Druckmessvorrichtung ausgebildet.

Vorzugsweise wirkt die Druckmessvorrichtung mit einer Bearbeitungsanlage zusammen. Das heißt, die Druckmessvorrichtung arbeitet mit der Bearbeitungsanlage zusammen. In einer bevorzugten Ausführungsform ist die Druckmessvorrichtung eine im Vergleich zur Bearbeitungseianlage eigenständige, separate Entität, die mit der Bearbeitungsanlage zusammenarbeitet. In einer anderen bevorzugten Ausführungsform ist die Druckmessvorrichtung nur zum Teil eine im Vergleich zur Bearbeitungsanlage eigenständige, separate Entität. Zumindest einzelne Komponenten der Druckmessvorrichtung sind, insbesondere integrale, Bestandteile der Bearbeitungsanlage und an oder in der Bearbeitungsanlage angeordnet oder ausgebildet. Diese letztgenannten Komponenten wirken zum Zwecke der Realisierung der Druckmessvorrichtung jedoch mit den erstgenannten Komponenten zusammen. In einer weiteren bevorzugten Ausführungsform sind alle Komponenten der Druckmessvorrichtung, insbesondere integrale, Bestandteile der Bearbeitungsanlage, die zur Realisierung der Druckmessvorrichtung jedoch funktional zusammenwirken. Bevorzugte Ausführungsbeispiele zu den verschiedenen Ausführungsformen werden im weiteren Verlauf der Beschreibung, insbesondere auch im Zusammenhang mit den Figuren in der Figurenbeschreibung, in größerem Detail beschrieben.

Eine Bearbeitungsanlage ist insbesondere eine Anlage zum Herstellen und/oder zum Handhaben und/oder zum Bearbeiten und/oder zum Untersuchen und/oder zum Bestimmen von Eigenschaften von Werkstücken, Dabei werden insbesondere zumindest einzelne Bearbeitungsschritte unter oder bei einem bestimmten Druck, vorzugsweise in wenigstens einer Prozesskammer, durchgeführt. Dabei ist in der Regel eine genaue Kenntnis des jeweils vorherrschenden, tatsächlichen Druckwerts erforderlich. In diesem Zusammenhang kommt die erfindungsgemäße Druckmessvorrichtung zum Einsatz. Die vorliegende Erfindung ist nicht auf bestimmte Typen von Bearbeitungsanlagen beschränkt. Einige Beispiele hierzu werden im weiteren Verlauf der Beschreibung näher erläutert.

In einer bevorzugten Ausführungsform, an der das Wesen der vorliegenden Erfindung exemplarisch sowie den Schutzumfang nicht beschränkend erläutert wird, ist die Bearbeitungsanlage als Vakuum-Bearbeitungsanlage ausgebildet. Eine solche Vakuum-Bearbeitungsanlage weist bevorzugt wenigstens eine Vakuum-Prozesskammer auf. Dabei ist in der Regel eine genaue Kenntnis des jeweils tatsächlich vorliegenden Vakuum-Werts erforderlich.

Der grundlegende Gedanke der vorliegenden Erfindung besteht insbesondere darin, zwei unterschiedliche Druckmessverfahren mit unterschiedlichen Druckmesseinrichtungen zu verwenden, welche unterschiedliche Eigenschaften haben, wobei die Messungen der beiden Druckmesseinrichtungen vorzugsweise zumindest weitestgehend parallel verlaufen und die Messungen der beiden Druckmesseinrichtungen kombiniert, vorzugsweise in Überlappung und/oder Überlagerung gebracht werden.

Gemäß dem ersten Aspekt der Erfindung wird eine Druckmessvorrichtung bereitgestellt, welche die Merkmale des unabhängigen Patentanspruchs 1 aufweist.

Die Druckmessvorrichtung weist erfindungsgemäß eine erste Druckmesseinrichtung auf. Die erste Druckmesseinrichtung ist konfiguriert, um erste Druckmesswerte bereitzustellen. Unter einer Bereitstellung von Druckmesswerten wird im Rahmen der vorliegenden Erfindung sowohl verstanden, dass die Druckmesswerte von der Druckmesseinrichtung direkt ermittelt, beispielsweise gemessen werden, aber auch, dass die Druckmesswerte indirekt bestimmt, beispielsweise berechnet, abgeleitet oder dergleichen werden.

Die erste Druckmesseinrichtung zeichnet sich durch eine hohe Genauigkeit und/oder Langzeitstabilität aus. Die erste Druckmesseinrichtung ist deshalb als Druckmesseinrichtung zur hochgenauen und/oder langzeitstabilen Druckmessung ausgebildet. Bei der ersten Druckmesseinrichtung handelt es sich erfindungsgemäß um ein Gasreibungsmanometer, beziehungsweise um eine Spinning- Rotor-Gauge-Sensoreinrichtung, die im Rahmen der Beschreibung abgekürzt auch als SRG-Sensoreinrichtung bezeichnet wird.

Gasreibungsmanometer an sich sind im Stand der Technik bereits bekannt.

Gemäß einer bevorzugten Ausführungsform weist das Gasreibungsmanometer eine rotierende Kugel auf. Ein solches Gasreibungsmanometer funktioniert grundsätzlich wie folgt: Eine Kugel wird in einem Magnetfeld reibungsfrei gelagert. Ein äußeres Drehfeld ($\approx$ 400 Hz) dient als Antrieb der Kugel, versetzt die Kugel in Rotation und bringt die Kugel zum Rotieren. Dann wird der Antrieb abgeschaltet. Durch die Reibung im Restgas wird die Kugel abgebremst. Mit Abtastspulen wird die Abnahme der Rotationsgeschwindigkeit gemessen und die Teilchendichte des Gases bestimmt. Die Abbremsrate kann als Maß der Dichte beziehungsweise des Drucks direkt gemessen werden. Bei diesem Verfahren gehen nur die globalen Eigenschaften der Kugel in die Messung ein und werden mit einem Faktor hinterlegt (Kalibrierfaktor), der Rest der Anordnung ist nicht variabel oder fehlerbehaftet. Die durch das Gasreibungsmanometer bereitgestellten Druckmesswerte werden bevorzugt in Form elektrischer Signale bereitgestellt.

Das Gasreibungsmanometer ermöglicht ein Messverfahren, das sich durch seine hohe Genauigkeit (1 % vom Messwert) sowie einen weiten (> 6 Dekaden) und bis in den Hochvakuumbereich (HV) reichenden Messbereich auszeichnet (>10 bis $1 \times 10^{-7}$ hPa). Die Druckmesseinrichtung ist durch eine rotierende Kugel als Sensor sehr einfach aufgebaut, arbeitet berührungslos, ohne Durchführungen ins Vakuum oder mechanisch beanspruchte Komponenten. Alle Informationen und Wechselwirkungen erfolgen über magnetische- und elektromagnetische Kräfte ins Vakuum. Das Gasreibungsmanometer besitzt damit keine elektrisch- oder mechanisch-belasteten Komponenten und erreicht eine entsprechend hohe Langzeitstabilität (drift < 1 %/Jahr), ist zudem robust und korrosionsbeständig, beispielsweise aus Ganzmetall. Da das Messsignal auf der Veränderung der Rotationsfrequenz eines kugelförmigen Körpers basiert und nicht auf Abstandsänderung oder der Ionisierung von Gasen, wird das Verfahren weit weniger von Temperatur-, Alterungs- oder Beschichtungseffekten beeinflusst. Aufgrund der Genauigkeit im Hochvakuum und der Langzeitstabilität ist das Gasreibungsmanometer in vielen Kalibrierlaboren als Transferstandard im Einsatz. Nachteilig am Druckmessverfahren mittels Gasreibungsmanometer ist dessen diskontinuierliche und verhältnismäßig langsame Messung (typischerweise alle 10 Sekunden ein Messwert). Die Druckverhältnisse dürfen sich in diesem Zeitraum nicht verändern (p = const, $t_{mess}$ > 10 sec) und weiterhin ist die exakt horizontale Ausrichtung des Sensorrohrs notwendig (< +/- 5°). Das Verfahren kann daher bislang nur bei sich sehr langsam verändernden, meist statischen Vakuumanwendungen und im Labor eingesetzt werden, somit ist die Verbreitung der Technologie z.B. in industriellen Vakuumanwendungen bislang stark eingeschränkt.

Mit der ersten Druckmesseinrichtung, das heißt mit dem Gasreibungsmanometer, wird insbesondere ein erstes Druckmessverfahren ausgeführt. Bevorzugt wird das Verfahren wie folgt ausgeführt:

- Bei niedrigen Drücken: Gas-Impuls - Übertrag, 1 bis $1 \times 10^{-7}$ mbar
- Stahlkugel schwebt und rotiert
- Abbremsung durch Gasreibung
- Diskontinuierliche, langsame Messung, daher bislang nur bei sich sehr langsam verändernden, statischen Vakuumanwendungen und damit oft nur im Labor einsetzbar

Die weiter oben beschriebenen Einschränkungen des Gasreibungsmanometers können durch die erfindungsgemäße Ausgestaltung der Druckmessvorrichtung nunmehr ausgeglichen werden.

Dazu wirkt die erste Druckmesseinrichtung mit einer zweiten Druckmesseinrichtung zusammen, die als eine im Vergleich zur ersten Druckmesseinrichtung schnellere und/oder kontinuierliche Druckmesseinrichtung ausgebildet ist. Die Druckmessvorrichtung weist deshalb eine zweie Druckmesseinrichtung auf, die als eine im Vergleich zur ersten Druckmesseinrichtung schnellere und/oder kontinuierliche Druckmesseinrichtung ausgebildet ist. Die zweite Druckmesseinrichtung ist konfiguriert, um zweite Druckmesswerte bereitzustellen.

In einer bevorzugten Ausführungsform stellt die zweite Druckmesseinrichtung einen Bestandteil einer als körperliche Entität ausgebildeten Druckmessvorrichtung dar.

Vorzugsweise sind in diesem Fall sowohl die erste als auch die zweite Druckmesseinrichtung körperlich zu einer einzigen Entität zusammengefasst. Beispielsweise können sowohl die erste Druckmesseinrichtung als auch die zweite Druckmesseinrichtung in einem Gehäuse angeordnet sein. Die von der ersten und zweiten Druckmesseinrichtung bereitgestellten Druckmesswerte werden in der als körperliche Entität, das heißt Einheit, ausgebildeten Druckmessvorrichtung verarbeitet. Dies kann beispielsweis ein einer wie weiter unten näher erläuterten Steuereinrichtung geschehen.

Gemäß einer anderen bevorzugten Ausführungsform befinden sich die beiden Druckmesseinrichtung körperlich nicht innerhalb einer einzigen körperlichen Entität, sondern nur die erste Druckmesseinrichtung. Die zweite Druckmesseinrichtung befindet sich dann außerhalb davon und kann beispielsweise Bestandteil einer Bearbeitungsanlage sein und an oder in der Bearbeitungsanlage angeordnet oder ausgebildet sein. In einem solchen Fall weist die Druckmessvorrichtung bevorzugt eine Schnittstelle auf, die zum Empfang von Druckmesswerten der zweiten Druckmesseinrichtung, konfiguriert ist. Über die Schnittstelle werden die von der zweiten Druckmesseinrichtung bereitgestellten Druckmesswerte in die Druckmessvorrichtung, beispielsweise in eine weiter unten beschriebene Steuereinrichtung, eingelesen. In diesem Fall kann es sich bei der zweiten Druckmesseinrichtung um eine beliebige andere Druckmesseinrichtung einer Bearbeitungsanlage handeln. Die von der zweiten Druckmesseinrichtung bereitgestellten Druckmesswerte werden über die Schnittstelle übertragen und an geeigneter Stelle innerhalb der Druckmessvorrichtung weiterverarbeitet.

Gemäß einer dritten bevorzugten Ausführungsform ist die zweite Druckmesseinrichtung wie im vorgenannten zweiten Ausführungsbeispiel wiederum nicht Bestandteil einer körperlichen Entität der Druckmessvorrichtung. Bei dieser Ausführungsform wird die zweite Druckmesseinrichtung nach wie vor von der Bearbeitungsanlage, beispielsweise von deren Anlagensteuerung, ausgelesen, und die Bearbeitungsanlage nutzt die erfassten zweiten Druckmesswerte der zweiten Druckmesseinrichtung selbst, um die erfindungsgemäße Druckmessung vorzunehmen.

Unter dem Begriff "konfigurieren" wird im Rahmen der vorliegenden Patentanmeldung insbesondere verstanden, dass eine Komponente für eine bestimmte Funktion ausgestaltet ist.

Die zweite Druckmesseinrichtung zeichnet sich bevorzugt durch Schnelligkeit und/oder kontinuierliche Messungen aus. Die zweite Druckmesseinrichtung ist deshalb bevorzugt als Druckmesseinrichtung zur schnellen und/oder kontinuierlichen Druckmessung ausgebildet.

Die vorliegende Erfindung ist nicht auf bestimmte Ausführungsformen für die zweite Druckmesseinrichtung beschränkt. Einige bevorzugte, jedoch nicht ausschließliche Ausführungsbeispiele werden im weiteren Verlauf der Beschreibung näher erläutert.

Bevorzugt sind die erste Druckmesseinrichtung und die zweite Druckmesseinrichtung in einem gemeinsamen Messraum angeordnet oder einem gemeinsamen Messraum zugeordnet. Bei dem Messraum handelt es sich vorzugsweise um die Prozesskammer einer Bearbeitungsanlage.

Erfindungsgemäß weist die Druckmessvorrichtung eine Steuereinrichtung auf, die derart bereitgestellt ist, dass sie in der Lage ist, die von der ersten Druckmesseinrichtung bereitgestellten ersten Druckmesswerte und die von der zweiten Druckmesseinrichtung bereitgestellten zweiten Druckmesswerte zueinander in Bezug zu setzen. Bevorzugte Ausführungsformen einer solchen Steuereinrichtung werden im weiteren Verlauf der Beschreibung näher erläutert.

Die Steuereinrichtung weist erfindungsgemäß eine Kalibriereinrichtung auf. Bevorzugte Ausführungsformen einer solchen Kalibriereinrichtung werden im weiteren Verlauf der Beschreibung näher erläutert. Die Kalibriereinrichtung ist derart bereitgestellt, dass sie in der Lage ist, die von der zweiten Druckmesseinrichtung bereitgestellten zweiten Druckmesswerte mittels der von der ersten Druckmesseinrichtung bereitgestellten ersten Druckmesswerte, insbesondere kontinuierlich, zu kalibrieren und optional zu justieren, und/oder die von der ersten Druckmesseinrichtung bereitgestellten ersten Druckmesswerte mittels der von der zweiten Druckmesseinrichtung bereitgestellten zweiten Druckmesswerte, insbesondere kontinuierlich, zu kalibrieren und optional zu justieren.

Bevorzugt werden die ersten und zweiten Druckmesswerte dabei nicht vermischt. Wenn die zweite Druckmesseinrichtung durch die erste Druckmesseinrichtung kalibriert wird, wird das Signal, das heißt der zweite Druckmesswert, der zweiten Druckmesseinrichtung mittels des Signals, das heißt des ersten Druckmesswerts, der ersten Druckmesseinrichtung kalibriert beziehungswiese rekalibriert und optional justiert, vorzugsweise kontinuierlich. Damit kann man einerseits die Eigenschaften der zweiten Druckmesseinrichtung, beispielsweise deren Schnelligkeit, beibehalten. Andererseits nutzt man auch die positiven Eigenschaften der ersten Druckmesseinrichtung, beispielsweise deren Genauigkeit und/oder Stabilität. Die Kalibriereinrichtung ist deshalb bevorzugt derart bereitgestellt, dass sie in der Lage ist, eine, vorzugsweise in-situ, Kalibrierung der zweiten Druckmesseinrichtung mittels der ersten Druckmesseinrichtung in einem, vorzugsweise zyklisch ablaufenden, Prozess auszuführen. Im Fall, dass die erste Druckmesseinrichtung durch die zweite Druckmesseinrichtung kalibriert wird, gilt Umgekehrtes.

Bevorzugt ist die Druckmessvorrichtung zum zueinander in Bezug-Setzen, das heißt insbesondere zum miteinander in Verbindung bringen, insbesondere zum Kombinieren, von Druckmesswerten, die von der ersten Druckmesseinrichtung und von der zweiten Druckmesseinrichtung bereitgestellt werden, konfiguriert, das heißt ausgestaltet. Die Kombination der Druckmesseinrichtungen beziehungsweise die Kombination der Druckmesswerte der beiden Druckmesseinrichtungen zu einem Signal kann auf verschiedene Weise realisiert werden/sein. In einer bevorzugten Ausführungsform ist die Druckmessvorrichtung derart ausgebildet, dass die Messungen der ersten und zweiten Druckmesseinrichtung zumindest weitgehend parallel verlaufen. Alternativ oder zusätzlich ist die Druckmessvorrichtung gemäß einer anderen bevorzugten Ausführungsform derart ausgebildet ist, dass die Messungen der ersten und zweiten Druckmesseinrichtung in Überlappung und/oder in Überlagerung gebracht werden. Dazu weist die Kalibriereinrichtung bevorzugt geeignete Kombinationsmittel, Überlappungsmittel beziehungsweise Überlagerungsmittel auf. Zur Ausgestaltung und zur Funktionsweise derartiger Mittel wird an dieser Stelle auch auf die Ausführungen zum erfindungsgemäßen Verfahren vollinhaltlich Bezug genommen und verwiesen. In weiterer Ausgestaltung kann aber auch der weitere Messbereich vorteilhaft zur Einstellung der zweiten Druckmesseinrichtung genutzt werden (Nullpunktseinstellung).

Die Druckmessvorrichtung der vorliegenden Erfindung ist in ihrer Gesamtheit bevorzugt ein Kombinationsdruckmessgerät, bei dem die Druckmesswerte der beiden Druckmesseinrichtungen, die bevorzugt in Form von Signalen vorliegen oder in Signale umgewandelt werden, beispielsweise per Software, bevorzugt zu einem Signal kombiniert werden.

Vorzugsweise führt immer die zweite Druckmesseinrichtung. Liegt beispielsweise keine Druckveränderung vor so dass ein stationärer Druck vorliegt, führt zwar das Signal der zweiten Druckmesseinrichtung, während die erste, langsame Druckmesseinrichtung einen genauen ersten Druckmesswert in Form eines genauen Signals ermittelt und optional in einer Speichereinrichtung speichert. Bei einer Veränderung des Drucks, was wiederum durch die zweite Druckmesseinrichtung ermittelt wird, wird das genaue Signal der ersten Druckmesseinrichtung nach internen Vorgaben auf den zweite Druckmesswert übertragen und kalibriert diesen. Wird erneut der Wert angefahren ist dieser genauer, und die Kalibrierkurve des ungenauen und wenig stabilen Messverfahrens auf den wahren Zustand heraufgesetzt, bzw. heruntergesetzt. In einer bevorzugten Ausführungsform ist vorgesehen, dass auf diese Weise die zweiten Druckmesswerte der zweiten Druckmesseinrichtung mittels der ersten Druckmesswerte der ersten Druckmesseinrichtung kalibriert und optional justiert werden. Ist der Druckbereich der zweiten Druckmesseinrichtung besser geeignet, kann alternativ oder zusätzlich in anderer Ausgestaltung die Kalibrierung und gegebenenfalls Justage auch in umgekehrter Folge erfolgen. Dies wird im Zusammenhang mit dem Kalibriervorgang weiter unten in größerem Detail beschrieben. Liegt eine Druckveränderung vor, führt ebenfalls das schnelle Signal der zweiten Druckmesseinrichtung. Ist der Druck wieder konstant, führt zwar wieder das Signal der zweiten Druckmesseinrichtung, und es misst die erste Einrichtung erneut im Hintergrund, kalibriert bei einer Veränderung des Drucks das zweite Signal erneut. Anders ausgedrückt: Das Signal der zweiten Druckmesseinrichtung wird, vorzugsweise immer wieder, durch das Signal der ersten Druckmesseinrichtung kalibriert, und bevorzugt auf den korrekten, sonst nie erreichbaren Genauigkeitswert von 1% vom Messwert zwischen 10 und $1\times10^{-7}$ mbar gebracht.

Durch die vorliegende Erfindung wird insbesondere eine einzigartige Messung in weiten Bereichen, insbesondere für eine Vakuum-Prozess-Mess und/oder -Regelung/Steuerung, realisiert. Es kann eine einmalig genaue, langzeitstabile und dennoch schnelle Messung über ungefähr 9 Dekaden im HV (10 bis $10^{-7}$mbar) realisiert werden. Die erfindungsgemäße Lösung zeichnet sich durch schnelle Antwortzeiten aus (hoch zu niedrig: Minuten-Sekunden / niedrig zu hoch: zweistellige ms). Es gibt eine einzigartige Genauigkeit von bis zu 1% vom Messwert im $10^{-4}$ bis $1\times10^{-7}$ Bereich. Der sinnvolle Bereich von z.B. kapazitiven Prozessmanometern kann um mindestens zwei Dekaden erweitert werden. Die erfindungsgemäße Lösung ist relativ unempfindlich auf Temperatur und Verunreinigungen. Es lässt sich unter geeigneten Voraussetzungen eine hohe Langzeitstabilität (von bis zu Jahren), nicht in Tagen/Wochen, realisieren. Die erfindungsgemäße Lösung erlaubt eine dynamische, schnelle Messung im Bereich des Vakuums (10 bis $5\times10^{-7}$mbar).

Je nach Ausgestaltung kann die Druckmessvorrichtung ab und zu zugeschaltet werden. Oder sie kann bevorzugt im kontinuierlichen Betrieb gefahren werden.

Grundsätzlich ist die Erfindung nicht auf bestimmte Typen der zweiten Druckmesseinrichtungen beschränkt. Nachfolgend werden hierzu einige bevorzugte Ausführungsbeispiele beschrieben.

In einer bevorzugten Ausführungsform ist die zweite Druckmesseinrichtung als ein Wärmeleitungs-Vakuummeter, insbesondere als ein Pirani-Vakuummeter, ausgebildet. In anderer Ausgestaltung können als zweites Messverfahren auch Ionisierende oder Kapazitive Systeme den zweiten Druckwert liefern.-Wärmeleitungs-Vakuummeter sind an sich aus dem Stand der Technik bereits bekannt und funktionieren grundsätzlich wie folgt: Ein Draht im Rezipienten wird durch den Strom durch eine Messbrücke erhitzt. Er kühlt durch Wärmeleitung der Gasmoleküle zur Wand des Rezipienten ab. Der temperaturabhängige Widerstand des Drahtes wird in der Messbrücke gemessen. Aus Widerstand und Heizstrom lässt sich die Wärmeleitung berechnen. Die Wärmeleitung ist proportional zu Teilchendichte und freier Weglänge und ist daher vom Druck unabhängig. Erst wenn die Dimension der Messanordnung kleiner wird als die freie Weglänge, ist die Wärmeleitung nur zur Teilchendichte und damit auch zum Druck proportional. Das Wärmeleitungs-Vakuummeter nutzt den linearen Zusammenhang zwischen Wärmeleitfähigkeit und Druck eines Gases aus. Kernstück dieser Druckmesseinrichtung ist ein stromdurchflossener Draht (Filament), der meist aus Wolfram besteht. Er gibt die in ihm erzeugte Wärme an das umgebende Gas ab. Bei Verringerung des Gasdruckes kann weniger Wärme abgeführt werden, dadurch würde sich die Temperatur des Drahtes und damit sein Widerstand erhöhen. Der Draht wird als ein Zweig einer Wheatstone'schen Brücke geschaltet. Die an dieser Brücke liegende Heizspannung wird so geregelt, dass der Widerstand und damit die Temperatur des Messdrahtes unabhängig von der Wärmeabgabe konstant ist. Somit kann man direkt aus der notwendigen Heizspannung auf den Gasdruck schließen. Das Wärmeleitungs-Vakuummeter misst also den Druck indirekt über die Teilchenanzahldichte. Da diese aber von der Art der Teilchen abhängig ist, ist die Druckmessung gasartabhängig. Die Druckskala ist gewöhnlich auf Stickstoff bezogen; der abgelesene Druck wird als "Stickstoffäquivalentdruck" bezeichnet.

Mit der zweiten Druckmesseinrichtung, vorzugsweise mit dem Wärmeleitungs-Vakuummeter, wird insbesondere ein zweites Druckmessverfahren durchgeführt. Dieses ist insbesondere ein zum ersten Druckmessverfahren der ersten Druckmesseinrichtung unabhängiges Messverfahren. Bevorzugt wird das Verfahren wie folgt ausgeführt:

- Indirekte Druckmessung
- Wärmeleitung von Gasen
- Heizdraht, zugeführte Leistung
- Hohe Drücke: Wärmeleitung ist abhängig vom Druck
- Liefert auch in dynamischen Messsituationen rasche Messergebnisse
- Muss aufgrund hoher Sensibilität gegenüber Umwelteinflüssen häufig neu kalibriert werden und liefert vergleichsweise ungenaue Daten.

In anderer Ausgestaltung kann die zweite Druckmesseinrichtung auch auf andere Weise ausgebildet sein. Die zweite Druckmesseinrichtung muss jedoch derart ausgebildet sein, dass sie die im Vergleich zur ersten Druckmesseinrichtung weiter oben geschilderten Kriterien erfüllen. Nachfolgend werden eine Reihe von Ausführungsbeispielen für die zweite Druckmesseinrichtung beschrieben.

Druckmesseinrichtungen werden anhand ihrer Messverfahren in unmittelbare (direkt auf der Definition der physikalischen Größe beruhende) und mittelbare (indirekt den Druck aus anderen physikalischen Effekten ableitende) Druckmesseinrichtungen eingeteilt. In der messtechnischen Praxis existieren noch weitere Einteilungen, beispielsweise.:

- nach Anwendungsbereich in Industrie-, Chemie- oder Standardmanometer.
- nach Druckbereich in Niederdruck-, Hochdruck- oder Vakuum-Messgeräte.
- nach Genauigkeit in Feinmess- oder Gebrauchsmanometer.
- nach Verfahren in elektrische, mechanische

oder mechatronische Druckmesseinrichtungen.

Beispielsweise kann es sich bei der zweiten Druckmesseinrichtung um eine unmittelbare Druckmesseinrichtung handeln. Hierbei handelt es sich um Druckmesseinrichtungen, deren Anzeigewert direkt auf einer der folgenden Beziehungen basiert:

$$ p = \frac{F}{A} \quad \text{oder} \quad \Delta p = \Delta h \varrho g $$

Der Druck (p) ist physikalisch das Ergebnis einer auf eine Fläche (A) einwirkenden Kraft (F). Das unmittelbarste Druckmessverfahren wäre demnach die Ermittlung einer auf eine gegebene Fläche einwirkende Kraft. Dies ist etwa beim Kolbenmanometer, mit seinem gewichtsbelasteten Kolben von definierter Querschnittsfläche realisiert. Auch Flüssigkeitsmanometer, bei denen der Druck nur noch von der Höhe (h) und der Dichte (Q) der Flüssigkeitssäule abhängt, werden als unmittelbare Druckmessgeräte angesehen, (g) ist die Schwerebeschleunigung. ⊿ gibt die Verwendung von Differenzgrößen an. Neben dem Kolbenmanometer arbeiten unter anderem auch Flüssigkeitsmanometer (U-Rohr-Manometer, McLeod-Manometer, etc.) nach diesem Prinzip.

In anderer Ausgestaltung kann es sich bei der zweiten Druckmesseinrichtung um eine mittelbare Druckmesseinrichtung handeln. Mittelbare Druckmesser nutzen sekundäre physikalische Effekte messtechnisch aus. Hierzu haben fast alle Gebiete der Physik beigetragen. Mechanische Druckmesseirichtungen nutzen meist die elastische Verformung des Messelementes aus. Andere Verfahren nutzen die elektrischen, optischen oder chemischen Wirkungen des Drucks. Als Verfahren, denen die Theorie über Druck als Maß für die Teilchenzahldichte zugrunde liegen, können genannt werden:

- Ionenstrommessung, hervorgerufen durch Ionisation der Gasteilchen; siehe Ionisations-Vakuummeter
- Kompression einer festgelegten Menge von Gas auf ein definiertes Volumen
- Reibung eines Körpers im Gas (aufgrund dessen Viskosität)
- Wärmetransport eines Gases; siehe Wärmeleitungs-Vakuummeter

Ebenfalls zu den mittelbaren Druckmessgeräten zählen Manometer mit federelastischem Messglied. Bei Federmanometern kommen zur Druckmessung metallische Federn verschiedener Art zum Einsatz. Die Kalibrierung erfolgt mithilfe von Flüssigkeitsmanometern. Die Vorteile der Federmanometer liegen in ihren geringen Kosten und ihrer Unempfindlichkeit gegen Umwelteinflüsse. Es gibt Rohrfeder-Manometer, Plattenfeder-Manometer sowie Kapselfeder-Manometer. Sie unterscheiden sich grundsätzlich in der Form der eingesetzten Feder.

Beispielsweise kann es sich bei der zweiten Druckmesseinrichtung um eine Absolut- und Differenzdruckmesseinrichtung handeln. Praktisch werden meist Druckmesseinrichtungen mit federelastischem Messglied zur Absolut- und Differenzdruckmessung eingesetzt. Für die Absolutdruckmessung ist hierbei der auf der Messfeder lastende atmosphärische Luftdruck durch ein Vakuum zu ersetzen. So wird bei einem Aneroidbarometer das Innere der Kapselfeder evakuiert, so dass der von außen einwirkende Luftdruck die Membranen verformt. Evakuiert man das Gehäuse eines Rohrfedermanometers, so erhält man ebenfalls ein Absolutdruckmessgerät. Bei einem Plattenfedermanometer ist die dem Messdruck abgewandte Seite der Plattenfeder zu evakuieren. Für die Differenzdruckmessung werden meist Plattenfeder-Messsysteme verwendet. Bei gleichem Druck in der positiven, wie in der negativen Druckkammer, erfahren die Plattenfedern keine Durchbiegung. Erst ein Druckunterschied in den Kammern ruft eine Durchbiegung der Plattenfedern hervor und die Druckdifferenz $\Delta p = p1 - p2$ wird durch Übertragung des Federhubs über eine Schubstange auf das Messwerk zur Anzeige gebracht. Die beiden Plattenfedern sind hydraulisch über eine Füllmedium gekoppelt. Die federnden Wellrohre sorgen für die Abdichtung der beiden Druckkammern gegenüber der Atmosphäre. Die beiden Dichtelemente sorgen für einen Überlastschutz: Sobald eine Seite des Differenzdruckmanometers überlastet wird, schließen sie die Druckkammer gegenüber der Atmosphäre sicher ab.

Beispielsweise kann es sich bei der zweiten Druckmesseinrichtung um eine piezoresistive Druckmesseinrichtung handeln. Die piezoresistiven Druckmesseinrichtungen basieren auf der Technologie der Wheatstone'schen Messbrücke. Die daraus erhaltene Widerstandsänderung kann der in dem Sensor integrierte Mikrochip in die physikalische Größe Druck umrechnen. Das hochsensible piezoresistive Sensorelement befindet sich in einem Druckmittler, der das Vordringen des Messmediums in das Druckmessglied verhindern soll. Das Messsystem wird mit einer Flüssigkeit gefüllt (z.B. Silikonöl, Glycerin oder Weißöl). Die Siliziummembran überträgt dabei den Druck auf die Flüssigkeit und diese den besagten Druck auf das Druckmessgerät.

In anderer Ausgestaltung kann es sich bei der zweiten Druckmesseinrichtung um eine kapazitive Druckmesseinrichtung (CM) handeln. In der kapazitiven Druckmessung wird die Kapazitätsänderung eines Kondensators ausgenutzt. Die Auslenkung der verformbaren Kondensatorplatte hat eine Abstandsänderung der beiden Kondensatorplatten zur Folge. Die Kapazität verändert sich damit reziprok zum Plattenabstand und damit zur Auslenkung der Kondensatorplatte, auf die eine Kraft wirkt. Bei kleinen Abstandsänderungen kann die Kapazitätsänderung linearisiert werden und bietet damit eine verwendbare Information, die über den ASIC als Druck transformiert werden kann.

In anderer Ausgestaltung kann es sich bei der zweiten Druckmesseinrichtung um eine Ionisations-Druckmesseinrichtung, beispielsweise ein Ionisations-Vakuummeter, handeln. Eine Ionisations-Druckmesseinrichtung ist ein Druckmessgerät zur Druckbestimmung im Hoch- und Ultrahochvakuumbereich, also etwa $10^{-3}$ bis $10^{-12}$ mbar. Das Prinzip basiert auf einer indirekten Druckmessung mittels elektrischer Größen, die zu den Restgaspartikeln mit der Teilchenzahldichte proportional sind. Dazu muss das Restgas ionisiert werden, wofür es unterschiedliche Umsetzungsmöglichkeiten gibt:

- Kaltkathoden-Ionisationsdruckmesseinrichtungen beziehungsweise Kaltkathoden-Ionisationsvakuummeter (CC)
- Heißkathoden-Ionisationsdruckmesseinrichtungen beziehungsweise Heißkathoden-Ionisationsvakuummeter oder Glühkathodenlonisationsvakuummeter (HC)

Beide Verfahren verwenden indirekt den aus dem Gas erzeugten Ionenstrom als Messgröße für den Druck. Um Ionen zu erzeugen, muss Energie in Form von Wärme und Spannung (Heißdraht/Filament - Glühkathoden HC) oder Hochspannung (Magnetfeld/Kaltkathoden CC) in das System übertragen werden. Sowohl die heißen Filamente als auch die erzeugten und beschleunigten Ionen sind reaktiv und führen im System zu Veränderungen (Oxidation, Sputtern).

Beide Effekte bewirken eine scheinbare Veränderung des Drucks und wirken sich auf die Genauigkeit und Reproduzierbarkeit über die Zeit aus. Dieses reaktive System führt zwangsweise zur Veränderung der elektrischen Eigenschaften und damit der gelieferten Messwerte. Eine dauerhaft präzise und reproduzierbare Messung wird so verhindert (der Druck wird als meist "zu gut/niedrig" angezeigt... aus Sicht des Vertriebs als positiv empfunden...).

Eine Kaltkathoden-Ionisationsdruckmesseinrichtung funktioniert grundsätzlich wie folgt: Zwischen Anode und Kathode liegt eine Gleichspannung von etwa 2 kV an. Vorhandene Elektronen werden in diesem Feld beschleunigt und ionisieren Restgasteilchen durch Stoßionisation. Es bildet sich ein druckabhängiger Entladungsstrom, der gemessen wird. Oberhalb von $10^{-2}$ mbar geht der Ionenstrom in eine Glimmentladung über, die vom Druck unabhängig ist (obere Messbereichsgrenze). Aufschlagende Ionen bleiben entweder auf der Kathode haften und werden dort neutralisiert, oder sie schlagen Material heraus (Kathodenzerstäubung). Das Material schlägt sich an den Wänden der Messräume nieder. Durch diesen Prozess wird die Kathode langsam verbraucht und ist daher meist austauschbar konstruiert. Auf der Restgasionisation mittels Kaltkathoden basiert das Penning-Vakuummeter.

Eine Heißkathoden-Ionisationsdruckmesseinrichtung, beispielsweise ein Glühkathoden-Ionisationsvakuummeter (HC), funktioniert grundsätzlich wie folgt: Dieses System basiert auf der Emission von Elektronen aus dem beheizten Kathodenmaterial. Zwischen der Glühkathode und der Anode liegt eine Spannung (U) an, die die emittierten Elektronen (e) beschleunigt. Diese Elektronen können unter der Bedingung $e * U \geq E_I$ wobei ($E_I$ = Ionisationsenergie) die Restgasteilchen ionisieren. Die positiv geladenen Gasionen werden von einer weiteren Kathode, deren Potential negativer ist als jenes der Glühkathode, angezogen. Die Neutralisation der Ionen führt zu einem messbaren (Elektronen-)Strom, welcher auf dem Ionenstrom basiert und daher von der Teilchenzahldichte im Restgas abhängt. Auf der Restgasionisation mittels Glühkathoden basiert beispielsweise das Bayard-Alpert-Vakuummeter.

Erfindungsgemäß weist die Druckmessvorrichtung eine Steuereinrichtung auf, die zur Verarbeitung und zum zueinander in Bezug-Setzen, insbesondere zur Kombination und/oder Überlappung und/oder Überlagerung, der von der ersten und zweiten Druckmesseinrichtung bereitgestellten Druckmesswerte konfiguriert, das heißt ausgestaltet. ist. Insbesondere handelt es sich bei der Steuereinrichtung um eine Signalverarbeitungseinrichtung, oder die Steuereinrichtung weist zumindest eine Einrichtung zur Signalverarbeitung auf. Dazu kann die Steuereinrichtung beispielsweise elektrische und/oder logische Bauelemente aufweisen, die in geeigneter Weise zu einer Schaltung zusammengefasst sind. Alternativ oder zusätzlich weist die Steuereinrichtung bevorzugt eine Prozessoreinrichtung auf, in der ein Computerprogrammprodukt abläuft, das, wenn es ausgeführt wird, die von den beiden Druckmesseinrichtungen bereitgestellten Druckmesswerte verarbeitet.

Je nach Ausgestaltung kann die Steuereinrichtung als eine oder mehrere Komponenten ausgebildet sein, und/oder an unterschiedlichen Orten platziert sein. Beispielsweise kann die Steuereinrichtung Bestanteil einer als körperliche Entität ausgebildeten Druckmessvorrichtung sein und beispielsweise in einem entsprechenden Gehäuse angeordnet oder ausgebildet sein. In anderer Ausgestaltung kann die Steuereinrichtung mehrteilig ausgebildet sein wobei ein Teil der Steuereinrichtung der körperlichen Entität der Druckmessvorrichtung zugeordnet ist, während sich wenigstens ein anderer Teil der Steuereinrichtung außerhalb davon befindet und beispielsweise in der Anlagensteuerung einer Bearbeitungsanlage angeordnet oder ausgebildet ist. In einer weiteren Ausführungsform kann die Steuereinrichtung nur Bestanteil der Anlagensteuerung einer Bearbeitungsanlage sein.

Vorzugsweise weist die Druckmesseinrichtung, insbesondere die Steuereinrichtung, eine Schnittstelle zu einer Anlagensteuerung einer Bearbeitungsanlage auf, wobei die Schnittstelle zum Übertragen von Signalen zwischen der Druckmessvorrichtung, insbesondere deren Steuereinrichtung, und der Anlagensteuerung konfiguriert, das heißt ausgestaltet ist. Dadurch wird es möglich, die in der Druckmessvorrichtung erzeugten Signale einer Anlagensteuerung einer Bearbeitungsanlage zur Verfügung zu stellen, wo sie zur Steuerung z.B. einer Bearbeitungsanlage verwendet werden.

Erfindungsgemäß weist die Steuereinrichtung eine Kalibriereinrichtung auf, die derart bereitgestellt ist, dass sie in der Lage ist, die zweite Druckmesseinrichtung, insbesondere die von der zweiten Druckmesseinrichtung bereitgestellten Druckmesswerte, auf Basis von Druckmesswerten der ersten Druckmesseinrichtung zu kalibrieren, und/oder umgekehrt. Bevorzugt weist die Kalibriereinrichtung eine Prozessoreinheit auf, wobei die Kalibrierung bevorzugt mittels geeigneter Programmmittel erfolgt, beispielsweise mittels eines geeigneten Computerprogrammprodukts. Unter "Kalibrierung" wird dabei insbesondere das Feststellen und Dokumentieren einer Abweichung der zweiten Druckmesseinrichtung, insbesondere der von der zweiten Druckmesseinrichtung bereitgestellten Druckmesswerte, vom richtigen Wert der Messgröße, das heißt des Drucks, verstanden. Es bedeutet somit das Feststellen einer Abweichung eines von der zweiten Druckmesseinrichtung bereitgestellten Druckmesswerts gegenüber einem Referenzwert, der im vorliegenden Fall durch den/die von der ersten Druckmesseinrichtung bereitgestellten Druckmesswert(e) gebildet wird. Optional kann die Kalibriereinrichtung ausgebildet sein, die entsprechenden Druckmesswerte nach deren Kalibrierung auch zu Justieren. Während mittels der Kalibrierung insbesondere eine Abweichung der Druckmesswerte ermittelt wird, werden die Druckmesswerte mittels des Justiervorgangs verändert und/oder angepasst. Durch diese Vorgehensweise können die von der zweiten Druckmesseinrichtung bereitgestellten Druckmesswerte mittels der von der ersten Druckmesseinrichtung bereitgestellten ersten Druckmesswerten, vorzugsweise kontinuierlich rekalibriert und optional justiert werden, beziehungsweise umgekehrt. Bevorzugt wird/werden die zweite Druckmesseinrichtung, insbesondere die von der zweiten Druckmesseinrichtung bereitgestellten Druckmesswerte, von der ersten Druckmesseinrichtung, insbesondere von den von der ersten Druckmesseinrichtung bereitgestellten Druckmesswerten, kalibriert und optional justiert. Das bedeutet insbesondere dass die von der zweiten Druckmesseinrichtung bereitgestellten Druckmesswerte mit den von der ersten Druckmesseinrichtung bereitgestellten ersten Druckmesswerten verglichen werden. Als Referenzsignal dienen dabei die ersten Druckmesswerte. Wird eine Abweichung der zweiten Druckmesswerte von den ersten Druckmesswerten erkannt beziehungsweise festgestellt, werden die zweiten Druckmesswerte an die ersten Druckmesswerte angepasst. Das kann beispielsweise mittels der oben genannten Programmmittel erfolgen. Der Kalibrierungsprozess wird im Zusammenhang mit dem erfindungsgemäßen Verfahren weiter unten in größer Detail beschrieben, so dass an dieser Stelle auch auf diese entsprechenden Ausführungen weiter unten vollinhaltlich Bezug genommen und verwiesen wird.

In weiterer Ausgestaltung weist die Steuereinrichtung bevorzugt eine Einrichtung zum Erzeugen elektrischer Signale auf Basis der von der ersten und/oder zweiten Druckmesseinrichtung bereitgestellten Druckmesswerte auf. Diese elektrischen Signale können dann an die Anlagensteuerung einer Vakuum-Bearbeitungsanlage weitergeleitet werden. Sofern es sich bei den von der Druckmesseinrichtung(en) bereitgestellten Druckmesswerten bereits um elektrische Signale handelt, kann eine solche Einrichtung natürlich entfallen. Die Druckmessvorrichtung, insbesondere deren Steuereinrichtung, stellt in diesen Fällen Fall einen so genannten Messwerttransmitter dar. Eingangsseitig empfängt die Druckmessvorrichtung, beispielsweise deren Steuereinrichtung, die Druckmesswerte der ersten und/oder zweiten Druckmesseinrichtung(en) und überführt diese in elektrische Signale, beispielsweise mittels Umwandlung. Oder aber, die Druckmesswerte werden bereits als elektrische Signale geliefert. In diesem Fall übernimmt die Druckmessvorrichtung, insbesondere deren Steuereinrichtung, beispielsweise die Funktion eines so genannten "Transducers".

In weiterer Ausgestaltung kann die Steuereinrichtung eine Speichereinrichtung oder eine Schnittstelle zu einer solchen Speichereinrichtung, aufweisen. In der Speichereinrichtung werden die von der ersten und/oder zweiten Druckmesseinrichtung bereitgestellten Druckmesswerte zumindest temporär gespeichert.

Vorzugsweise ist die Druckmessvorrichtung für die in-situ Ermittlung eines Prozessdrucks in einer Bearbeitungsanlage konfiguriert, das heißt ausgestaltet. Das bedeutet, dass die Druckmessvorrichtung den Prozessdruck direkt vor Ort ermitteln kann. Dies kann beispielsweise realisiert sein, indem die Druckmessvorrichtung in räumlicher Nähe zu der Bearbeitungsanlage platziert ist. Beispielsweise kann die Druckmessvorrichtung an der Bearbeitungsanlage angeordnet oder neben der Bearbeitungsanlage platziert sein. Bevorzugt weist die Druckmessvorrichtung in diesem Fall ein Gehäuse auf, wobei die einzelnen Komponenten innerhalb des Gehäuses angeordnet sind. Zumindest einzelne Komponenten der Druckmessvorrichtung können in anderer Ausgestaltung auch in der Bearbeitungsanlage integriert sein.

Gemäß dem zweiten Aspekt der Erfindung wird eine Bearbeitungsanlage bereitgestellt, welche wenigstens eine Prozesskammer sowie wenigstens eine Anlagensteuerung, sowie weiterhin wenigstens eine Druckmessvorrichtung gemäß dem ersten Erfindungsaspekt aufweist. Aus diesem Grund wird an dieser Stelle auch auf die Ausführungen zum ersten Erfindungsaspekt sowie auf die allgemeine Erfindungsbeschreibung weiter oben vollinhaltlich Bezug genommen und verwiesen. Die Erfindung ist nicht auf bestimmte Typen von Bearbeitungsanlagen beschränkt. Einige bevorzugte Ausführungsformen hierzu werden weiter unten näher erläutert. Vorzugsweise handelt es sich bei der Bearbeitungsanlage um eine Vakuum-Bearbeitungsanlage.

Vorzugsweise weist die Anlagensteuerung wenigstens eine Schnittstelle zu der Druckmessvorrichtung auf. Diese Schnittstelle ist zum Austausch von Signalen zwischen der Anlagensteuerung und der Druckmessvorrichtung konfiguriert beziehungsweise ausgestaltet. Die von der Druckmessvorrichtung, insbesondere von deren Steuereinrichtung abgehenden Signale, die insbesondere als elektrische Signale vorliegen, können nach Eingang in der Anlagensteuerung zur Steuerung der Bearbeitungsanlage verwendet werden. In anderer Ausgestaltung kann die Vakuum-Druckmessvorrichtung, insbesondere deren Steuereinrichtung, Bestandteil der Anlagensteuerung sein.

Nachfolgend wird zur Verdeutlichung der Erfindung die Bearbeitungsanlage im Rahmen einer bevorzugten Ausführungsform in Form einer Vakuum-Bearbeitungsanlage auf dem Gebiet der Halbleiterherstellung beschrieben. Selbstverständlich ist die Erfindung nicht auf diese eine spezielle Ausführungsform beschränkt. Vorzugsweise ist die Bearbeitungsanlage als eine Vakuum-Bearbeitungsanlage im Bereich der Halbleiterherstellung ausgebildet. Gerade die Halbleitertechnologie zeichnet sich durch immer kleinere Strukturgrößen und immer komplexer gestaltete Bauelemente aus. Zudem sollen die Elemente auf möglichst geringer Fläche defektfrei hergestellt werden können (Zero Defect Strategy). Aus Kosten- und technologischen Gründen soll die Prozessierung auf möglichst großen und eventuell möglichst dünnen Wafern erfolgen. Wafer sind etwa ein Millimeter dicke Scheiben, die aus Halbleiterrohlingen gefertigt werden und meist aus Silicium bestehen. Um moderne Prozessoren herzustellen, müssen diese hunderte von Prozessschritten durchlaufen, viele davon im FV und HV mit der Überwachung einer der wichtigsten Prozessgrößen - dem Druck.

Eine Folge der zunehmenden Komplexität und Anzahl der Prozessschritte ist, dass die Prozessfenster immer enger gefasst werden müssen und Druckbereiche immer weiter in den HV-Bereich wandern. Es wird weniger Material/Zeiteinheit abgeschieden, aber die Bedingungen sind definierter.

Aktueller Stand der Technik zur Vakuum-Prozesskontrolle ist hier der Einsatz von kapazitiven Druckaufnehmern (CM). Die weit verbreiteten kapazitiven Manometer (CM) basieren auf der direkten Messung des Drucks (p) als proportionale Kraft (K) auf eine konstante Fläche (A). Die Auslenkung (x) Membran wird kapazitiv zu einer Gegenelektrode gemessen. Die Membran ist ein Teil des Kondensators/Brückenschaltung und die Abstandsänderung wird so in ein elektrisches Signal gewandelt.

Bei kleiner werdendem Druck stößt ein kapazitives Messverfahren prinzipbedingt an seine Grenzen: Die wirkenden Kräfte werden immer geringer, die Membran muss immer dünner ausgelegt werden und wird damit aber auch leichter plastisch deformiert, empfindlicher gegen Überdruck, Druckstöße, Alterung, Beschichtung, Partikel, etc.. Effekte durch Temperaturänderungen und damit verbundenen minimalen Längenänderungen nehmen zu, selbst der Einfluss des Umgebungsdrucks auf das Gehäuse muss zum Teil kompensiert werden. Ein häufiger Nullpunktabgleich wird je nach Einsatzbedingungen notwendig. Um den Effekt der Temperatur im Druckbereich $10^{-3}$ hPa und darunter unter Kontrolle zu halten, werden die Sensoren aufwendig auf 45 °C beheizt. Neben den Effekten der thermischen Transpiration müssen lange Aufwärmphasen in Kauf genommen werden und die Umgebungstemperatur darf die 45 °C nie überschreiten. Generell ist der Aufbau eines kapazitiven Sensors recht komplex - mit kleinen Abständen, Totvolumina, Schutzmechanismen gegen das Eindringen von Partikeln, Getter gepumptes Referenzvakuum, etc. Das System muss mit einer aufwendigen Temperierung vor äußeren Einflüssen geschützt werden. Ein einziges Partikel oder selbst dünne Beschichtungen ($\mu$m) oder eine mechanische Überbelastung führen zum irreparablen Ausfall des teuren und aufwendigen Sensors (1.5 bar abs). Temperierte CMs können bis ca. $p_{min} = 10^{-4}$ hPa noch eingeschränkt eingesetzt werden. CMs zur Prozesskontrolle werden in vielen Halbleiterprozessen eingesetzt und jährlich in >>10.000 Stückzahlen auf den Markt gebracht (PVD, Dry-Etch, CVD, Diffusion, etc.). Unterhalb eines Druckbereiches von ca. < $10^{-3}$ hPa beginnen aber Effekte wie die Änderung der Umgebungstemperatur oder die Beschichtung der Membran ($\mu$m Bereich) das Messergebnis zu beeinflussen, welches sich in der Anwendung im Fortlaufen des Signals äußert (drift).

Aus diesem Grund ist mindestens eine regelmäßige Nullpunkteinstellung vorzunehmen. Gerade aber bei Beschichtungen ist auch final ein Sensortausch notwendig, allerdings aufgrund des hohen Aufwandes nicht erwünscht. Die Nullpunkteinstellung ist zudem eine "lineare Offset Justage" und bedeutet nicht, dass die Kalibrierung über den spezifizierten Messbereich noch gegeben ist. Unterhalb von $10^{-4}$ hPa ist nach Stand der Technik mit ionisierenden Verfahren zu arbeiten (CC, HC): Genauigkeiten bei Auslieferung > 10 % vom Messwert mit den bereits genannten und allgemein bekannten Nachteilen im Gebrauch der Systeme (Verunreinigung, Sputtern, Energieeintrag).

Eine erfindungsgemäße Druckmessvorrichtung, insbesondere in Form einer Vakuum-Druckmessvorrichtung, kann nunmehr vorteilhaft auch für solche oder in solchen Halbleiter-Herstellungsanlagen zum Einsatz kommen.

Gemäß dem dritten Aspekt der Erfindung wird ein Verfahren zur Druckmessung mittels einer Druckmessvorrichtung, insbesondere einer Druckmessvorrichtung gemäß dem ersten Erfindungsaspekt, bereitgestellt. Zur Funktionsweise des Verfahrens wird an dieser Stelle deshalb auch auf die Ausführungen zum ersten Erfindungsaspekt, ebenso wie auf die allgemeine Erfindungsbeschreibung weiter oben vollinhaltlich Bezug genommen und verwiesen. Das Verfahren ist durch folgende Schritte gekennzeichnet:

mittels einer ersten Druckmesseinrichtung, die als Gasreibungsmanometer ausgebildet ist, werden erste Druckmesswerte bereitgestellt;
mittels einer zweiten Druckmessvorrichtung, die als eine im Vergleich zur ersten Druckmesseinrichtung schnellere und/oder kontinuierliche Druckmesseinrichtung ausgebildet ist, werden zweite Druckmesswerte bereitgestellt;
in einer Steuereinrichtung der Druckmessvorrichtung werden die ersten Druckmesswerte der ersten Druckmesseinrichtung und die zweiten Druckmesswerte der zweiten Druckmesseinrichtung zueinander in Bezug gesetzt, derart, dass in einer Kalibriereinrichtung der Steuereinrichtung die von der zweiten Druckmesseinrichtung bereitgestellten zweiten Druckmesswerte mittels der von der ersten Druckmesseinrichtung bereitgestellten ersten Druckmesswerte, insbesondere kontinuierlich, kalibriert und optional justiert werden, und/oder die von der ersten Druckmesseinrichtung bereitgestellten ersten Druckmesswerte mittels der von der zweiten Druckmesseinrichtung bereitgestellten zweiten Druckmesswerte, insbesondere kontinuierlich, kalibriert und optional zu justiert werden.

Die Grundlagen des Verfahrens lassen sich auch wie folgt beschreiben: Ein hochgenaues und langzeitstabiles, aber langsames und diskontinuierliches Druckmessverfahren mittels einer ersten Druckmesseinrichtung, nämlich mittels eines Gasreibungsmanometers beziehungsweise einer SRG-Sensoreinrichtung, wird in ein hochgenaues und langzeitstabiles UND schnelles und kontinuierliches Messverfahren überführt. Dies wird erreicht durch die Kombination des Messignales dieser ersten Druckmesseinrichtung mit dem Messignal einer zweiten Druckmesseinrichtung, bei der es sich bevorzugt um einen einfachen Sensor handelt, wobei die zweite Druckmesseinrichtung eine Dynamik (eine Kennlinie) im Messbereich der ersten Druckmesseinrichtung haben sollte und schnell, das heißt quasi kontinuierlich, misst.

Bevorzugt ist das Verfahren zur Druckmessung in einer Bearbeitungsanlage, insbesondere einer Bearbeitungsanlage gemäß dem zweiten Erfindungsaspekt, ausgebildet. Zur Funktionsweise des Verfahrens wird an dieser Stelle deshalb auch auf die entsprechenden Ausführungen zum zweiten Erfindungsaspekt vollinhaltlich Bezug genommen und verwiesen.

Vorzugsweise werden die Druckmesswerte von der ersten Druckmesseinrichtung und von der zweiten Druckmesseinrichtung parallel oder nahezu parallel erfasst.

In weiterer Ausgestaltung werden die von der ersten Druckmesseinrichtung und von der zweiten Druckmesseinrichtung erfassten Druckmesswerte vorzugsweise in Überlappung und/oder in Überlagerung gebracht.

Gemäß einer bevorzugten Ausführungsform wird ein Verfahren zur Druckmessung, insbesondere unter Verwendung einer Druckmessvorrichtung nach dem ersten Erfindungsaspekt, bereitgestellt, das dadurch gekennzeichnet ist, dass Druckmessungen mittels einer ersten Druckmesseinrichtung vorgenommen werden, dass Druckmessungen mit einer zweiten Druckmesseinrichtung vorgenommen werden, dass die Messungen/Messbereiche der ersten und zweiten Druckmesseinrichtung insbesondere zumindest weitgehend parallel und/oder insbesondere in weiten Bereichen überlappend verlaufen, und dass die Messbereiche der ersten Druckmesseinrichtung und der zweiten Druckmesseinrichtung kombiniert, insbesondere in einem Signal in Überlappung und/oder in Überlagerung gebracht werden, evtl. aber auch der weitere Messbereich der einen, insbesondere der ersten Druckmesseirichtung, vorteilhaft zur Einstellung der anderen, insbesondere der zweiten Druckmesseinrichtung genutzt wird (Nullpunktseinstellung).

Vorzugsweise führt bei dem Druckmessverfahren immer die zweite Druckmesseinrichtung.

Der Kalibriervorgang mit dem optional Justiervorgang wird nachfolgend anhand eines bevorzugten Ausführungsbeispiels erläutert. Dabei soll vorgesehen sein, dass in der Kalibriereinrichtung der Steuereinrichtung die von der zweiten Druckmesseinrichtung bereitgestellten zweiten Druckmesswerte mittels der von der ersten Druckmesseinrichtung bereitgestellten ersten Druckmesswerte, insbesondere kontinuierlich, kalibriert und optional justiert werden, Wird anhand der von der zweiten Druckmesseinrichtung bereitgestellten zweiten Druckmesswerte ein stationärer Druck ermittelt, wird der Druck anhand der von der ersten Druckmesseinrichtung ermittelten ersten Druckmesswerte bestimmt und optional in einer Speichereinrichtung abgespeichert. Bei einem stationären, das heißt konstanten Druck, wenn keine Druckänderung vorliegt, führt folglich zwar das Signal der zweiten Druckmessvorrichtung, während die erste, langsame, Druckmesseinrichtung ein genaues Druckmesssignal ermittelt und optional abspeichert. Wird anhand der von der zweiten Druckmesseinrichtung bereitgestellten zweiten Druckmesswerte ein sich verändernder Druck ermittelt, werden die zweiten Druckmesswerte der zweiten Druckmesseinrichtung anhand der von der ersten Druckmesseinrichtung ermittelten und optional abgespeicherten ersten Druckmesswerte kalibriert und optional justiert. Bei einer Veränderung des Drucks, bei der nach wie vor das Signal der zweiten Druckmesseinrichtung führt, wird das genaue Druckmesssignal der ersten Druckmesseinrichtung, insbesondere nach internen Vorgaben, auf das zweite Druckmesssignal der zweiten Druckmesseinrichtung übertragen und kalibriert dieses, optional mit einer Justierung. Wird erneut dieser Druckwert angefahren, ist dieser nun genauer. Die Kalibrierkurve des ungenaueren und weniger stabilen zweiten Druckmessverfahrens wird somit auf den wahren Druckwert heraufgesetzt beziehungsweise herabgesetzt.

Das bedeutet, ist der Druck stationär beziehungsweise konstant, was die zweite Druckmesseinrichtung erkennt, bestimmt die erste Druckmesseinrichtung den genauen Druck und speichert diesen optional in der Speichereinrichtung ab. Erst bei einem veränderlichen beziehungsweise sich verändernden Druck, was ebenfalls die zweite Druckmesseinrichtung erkennt, wird der zweite Druckmesswert der zweiten Druckmesseinrichtung kalibriert und optional justiert beziehungsweise nachjustiert. Dieser Vorgang wiederholt sich vorzugsweise, und erfolgt insbesondere bei unterschiedlichen Drücken, so dass aus einer Einpunkt-Kalibrierung eine Mehrfachkalibrierung, auch bei unterschiedlichen Drücken, erfolgt. Das System wird kontinuierlich genauer. Beispielsweise werden Drifts des zweiten Druckmessverfahrens ausgeglichen.

Realisiert ist insbesondere die Kombination des Messsignals einer ersten Druckmesseinrichtung, insbesondere eines Messsignals des Gasreibungsmanometers, mit dem Signal einer zweiten Druckmesseinrichtung, beispielsweise einer einfachen, aber schnellen, parallel dazu messenden Druckmesseinrichtung. Damit können erstmals Messwerte mit hoher Genauigkeit und Langzeitstabilität auch für dynamische Produktionsprozesse zur Verfügung gestellt werden. Die Ausgabe der Druckwerte erfolgt digital oder analog, vorzugsweise nach der internen softwarebasierenden Berechnung. In einer bevorzugten Ausführungsform des Messverfahrens kann die erste Druckmesseirichtung, das genaue Gasreibungsmanometer, künftig die zweite Druckmesseinrichtung, beispielsweise ein schnelles Pirani, kalibrieren und optional justieren.

Vorzugsweise werden die Eigenschaften und Vorteile zweier Messverfahren mit ihren Nachteilen ausgeglichen und die Verfahren kombiniert:
Ein grundlegendes Merkmal der vorliegenden Erfindung ist es, erstmals eine Druckmesseinrichtung bereitzustellen, die zur Prozesskontrolle bis ins Hochvakuum eingesetzt werden kann (typisch: 1 bis ca. $1 \times 10^{-7}$ hPa) und alle bislang bekannten Verfahren bezüglich Genauigkeit, Langzeitreproduzierbarkeit, Robustheit, Schnelligkeit, Dynamik und Messbereich <$10^{-3}$ hPa übertrifft. In der Ausführung in der die zweite Druckmesseinrichtung aus einem korrosionsbeständigen Material, beispielsweise aus Ganzmetall, besteht, was bei manchen CMs der Fall ist, ergibt dies zudem ein Messverfahren das einmalig bis ins HV misst, mit einer Korrosionsbeständigkeit die den Einsatz von Piranies, HC und CC bislang schwierig bzw. unmöglich machte. Die vorliegende Erfindung schließt damit auch eine anwendungsbegrenzte Lücke im Druckbereich bis typisch $1 \times 10^{-7}$ mbar

Zu diesem Zweck werden die Vorteile der ersten Druckmesseinrichtung, insbesondere des Gasreibungs-Prinzips, möglichst beibehalten und dessen Nachteile durch eine zweite Druckmesseinrichtung kompensiert. Die Druckmessvorrichtung misst möglichst lageunabhängig, liefert (quasi-)kontinuierliche Messsignale und kann schnell auf Messwertveränderungen reagieren (p = const und variabel, $t_{mess}$< 100 msec). Die positiven Eigenschaften wie Genauigkeit, Reproduzierbarkeit, hohe Dynamik und ein sinnvoll verwertbares Signal bis in den Hochvakuumbereich ($1 \times 10^{-7}$ hPa) bleiben bevorzugt erhalten.

Aufgrund dieser Eigenschaften kann sich der Einsatzbereich der erfindungsgemäßen Lösung in viele Prozess-Anwendungen erweitern, z.B. der Halbleiterindustrie, die bislang auf kapazitive Druckaufnehmer (CM, $p_{min}$ > $10^{-4}$ hPa) und im Druckbereich darunter auf ionisierende Verfahren wie Heißkathoden (HC, $p_{min}$ > $10^{-12}$ hPa) oder Kaltkathoden(CC, $p_{min}$ > $10^{-12}$ hPa) angewiesen ist. Letztere genannten $p_{min}$ sind lediglich Spezifikationen, die meisten Anlagen für Prozessanwendungen erreichen einen Basisdruck von $10^{-5}$ bis $10^{-7}$ hPa. Die Erfindung ermöglicht zudem eine Anwendung im HV Bereich in denen CC, HC und Piranies korrosions- oder beschichtungsbedingt nicht einsetzbar sind.

Die Vorteile der erfindungsgemäßen Lösung lassen sich erkennen in der bisher unerreichten hohen Messgenauigkeit < $10^{-3}$ hPa bei Langzeitreproduzierbarkeit (<1% Drift/a), Beständigkeit gegen Beschichtungen (geht nur in die Veränderung des Kugeldurchmessers ein) und weitgehender Temperaturunabhängigkeit (Wurzel T in °K) mit dem erstmaligen Vorteil eines einfach aufgebauten Hauptsensors (zerlegbar, robust und zu reinigen).

Fast alle Vakuum- und Hochvakuum-Halbleiterprozesse laufen wiederkehrend (cyklisch), relativ langsam und kontrolliert, möglichst reproduzierbar ab, da ansonsten Wafer unbrauchbar, beschädigt, Partikel erzeugt werden, etc. Somit stellt sich der Ablauf auf einer Zeitskala von Minimum mehreren Minuten nach einem bestimmten, immer wiederkehrenden Schema dar: Abpumpen auf Basisdruck, Einlassen von Medien auf Prozessdruck, gegebenenfalls Temperaturanpassung, Prozessstart, etc. Prozesse mit Loadlock (Wafer werden erst ins Vakuum eingebracht und dann unter Vakuumbedingungen auch gehandhabt) können sicherlich abweichen, da das Abpumpen an der Kammer von Atmosphäre entfällt. Eine Voraussetzung zum Funktionieren der erfindungsgemäßen Technologie ist, dass ein Prozess einen in Summe (nach mehreren Zyklen) beispielsweise ca. 10 Sekunden dauernden, Prozessschritt mit konstantem Druck aufweist.

Die aus der vorliegenden Erfindung hervorgehenden Effekte werden insbesondere wie folgt definiert:

1) Entwicklung eines Drucksensors, insbesondere eines SRG-Drucksensors, mit bisher nicht erreichter Messgeschwindigkeit

2) Genaues, langzeitstabiles, robustes Prozessmanometer, insbesondere für Druckbereiche $10^{-3}$ bis $1 \times 10^{-7}$ hPa

3) Technologie, insbesondere SRG-Technologie, in Form eines Transducers zur Integration in Anlagensteuerungen

4) Ein weitgehend Beschichtungs- und Umgebungstemperatur unempfindliches Prozessmanometer, insbesondere im Druckbereich $10^{-1}$ bis $1 \times 10^{-7}$ hPa

5) Korrosionsbeständigkeit auch im HV in Kombination mit korrosionsbeständiger zweiter Druckmesseinrichtung

Die Vorteile der erfindungsgemäßen Technik sind insbesondere, die herausragenden Eigenschaften eines Transferstandards auf Prozessanwendungen zu übertragen. Die Nutzer profitieren beim Einsatz der erfindungsgemäßen Technologie von erhöhter Prozesssicherheit und gesteigerter Ressourceneffizienz, weil dadurch der Materialausschuss im Produktionsprozess, z.B. in der Halbleiterindustrie, sowie die Herstellungskosten gesenkt und in Folge auch höhere Produktmargen erzielt werden können. Die einmalige Korrosionsbeständigkeit zw 10-3 und $1 \times 10$-7mbar.

Die Entwicklung der erfindungsgemäßen Technologie, insbesondere der Gasreibungs-Technologie, zu einem kontinuierlich und schnell messendes Verfahren eröffnet neue Applikationen, die bislang in der Praxis, wenn überhaupt nur mit großem, meist unrentablem Aufwand anderweitig bewerkstelligt werden konnten (regelmäßiger Sensortausch, Anbringen und Auswerten mehrerer Messverfahren, häufige Nullpunkteinstellung). Der Einsatz von indirekten Verfahren unmöglich oder schwierig war (aufgrund der Korrosions- und Beschichtungsempfindlichkeit).

Im Gegensatz dazu könnten die Anwender dank der Einfachheit des Hauptsensors, insbesondere der ersten Druckmesseinrichtung, beim Gasreibungs-Vakuummeter eine einfache Kugel, von einer nahezu beliebig langen Lebensdauer des Gerätes profitieren, denn selbst im Fall der Verschmutzung oder Beschädigung wäre dieser einfach zugänglich, zu reinigen bzw. auszuwechseln. Zudem könnte das vorherrschende Risiko, das System durch Überdruck zu beschädigen, ausgeschaltet werden (kein Vergleich zur Anfälligkeit und Komplexität eines CM oder Verschmutzungsanfälligkeit einer CC bzw. HC).

Es ist das Verdienst der Erfinder, dass sie erstmals zwei sehr verschiedene Druckmesseinrichtungen mit unterschiedlichen Messverfahren in dieser wie vorstehend beschriebenen Weise kombinieren konnten.

Ein Grundmerkmal der vorliegenden Erfindung ist die Kombination von zwei parallel messenden Druckmesseinrichtungen, die sich in ihren Zeitkonstanten vollkommen unterscheiden. Die erste Druckmesseinrichtung in Form des Gasreibungsmanometers misst zudem diskontinuierlich, hat Beschleunigungsphasen (ca. 1 Sekunde) und benötigt zwei Messpunkte zur Druckbestimmung, in denen sich der Druck nicht ändern darf (ca. $2 \times$ 5 Sekunden = 10 Sekunden). Eventuell müssen die Messintervalle dynamisch angepasst werden.

Erfindungsgemäß wird, in Abhängigkeit vom Druck (bestimmt die Messzeit der ersten Druckmesseinrichtung) und der Veränderung des Drucks (erste Druckmesseinrichtung kann nicht messen), ein einziges Messsignal geliefert, beispielsweise:

- Für sich schnell verändernde Situationen (z.B. Abpumpen, Zünden von Plasmen, etc.)
- Für Genauigkeit während der Prozessierung sorgen (Abscheiden, Ätzen, Implatieren, Gefriertrocknung)
- Reproduzierbare Langzeitstabilität sicherstellen (Wiederholgenauigkeit auch nach Wochen und Monaten)
- Messung auch in korrosiver Anwendung mit zweiter Druckmesseinrichtung als korrosionsbeständiger Ausführung

Die erfindungsgemäße Druckmesseinrichtung mit den zwei unterschiedlichen Druckmesseinrichtunen die somit eine Kombieinrichtun darstellt, die vorliegend auch als SRG-Combi Transducer (wide range gauge) bezeichnet wird, hat die folgenden Alleinstellungsmerkmale.

- Den erweiterten Messbereich zwischen $10^{-4}$ hPa bis $1 \times 10^{-7}$ hPa
- Die hohe Langzeitstabilität (< 1 %/a),

- Die größere Unempfindlichkeit gegen Störgrößen wie

  ◦ Temperatur (Wurzel T absolut)
  ◦ Beschichtung (minim. Anwachsen des Kugeldurchmessers, aber was sind z.B. 10ym auf 4.5mm)
  ◦ Alterung von elektronischen Komponenten (es wird nur die Rotationsfrequenz der Kugel bestimmt)

- Den zerlegbaren, zu reinigenden und kostengünstigen Hauptsensor.
- Die sofortige Einsatzbereitschaft (nach ca. 10 Sekunden)
- Keine Beeinflussung des Vakuums oder des Prozesses durch Temperaturerhöhung bzw. Ionisierung
- Korrosionsbeständigkeit

Dies alles prädestiniert die Druckmessvorrichtung, insbesondere einen SRG Combi Transducer, besonders zum Einsatz in Halbleiterprozessen:

a) in denen Materialien abgeschieden oder geätzt werden, die sich auch auf dem Sensor ablagern und das Messignal der CMs deutlich stören (CVD, PVD, Dry-Etch).
b) in denen der sinnvoll zu nutzende Messbereich der CMs nicht mehr hineinreicht bzw. zu stark durch Effekte wie Temperatur, Auflösungsgrenze oder Mechanik gestört wird (<10⁻³ hPa) (Dry -Etch, Annealing, e-beam Epitaxie, Implant).

Bei CMs führen a) und b) zu einem Drift oder zu einem Schwanken des Signales in der letzten Dekade des Messbereiches und sind von Änderungen im Prozess nicht mehr zu unterscheiden.

Generell ist im Druckbereich kleiner $10^{-3}$ hPa ein CM stark von Temperatureinflüssen beeinflusst. Bei der erfindungsgemäßen Vakuum-Druckmessvorrichtung fallen diese weniger stark ins Gewicht (Wurzel T absolut), zumal man sich immer noch in einem optimalen Messfenster bewegt während die CMs an ihrer physikalischen Auflösungsgrenze sind.

Bei Drücken $<10^{-3}$hPa werden indirekte Messverfahren eingesetzt die aber korrosions- und beschichtungsempfindlich sind (daher oft ungeeignet), zudem das Vakuum selbst beeinflussen (Gettern und Chemische Reaktion)

Die vorliegende Erfindung ist jedoch nicht auf den Einsatz in solchen Halbleiterprozessen beschränkt.

Die Erfindung wird nun anhand von Ausführungsbeispielen unter Bezugnahme auf die beiliegenden Zeichnungen näher erläutert. Es zeigen

Figur 1    eine erste Ausführungsform einer erfindungsgemäßen Druckmessvorrichtung;
Figur 2    eine zweite Ausführungsform einer erfindungsgemäßen Druckmessvorrichtung;
Figur 3    eine dritte Ausführungsform einer erfindungsgemäßen Druckmessvorrichtung;
Figur 4    beispielhafte Charakteristiken einer ersten Druckmesseinrichtung in Form eines Gasreibungsmanometers;
Figur 5    beispielhafte Charakteristiken der ersten Druckmesseinrichtung im Vergleich zu einer zweiten Druckmesseinrichtung;
Figur 6    beispielhafte Charakteristiken einer erfindungsgemäßen Druckmessvorrichtung bestehend aus erster und zweiter Druckesseinrichtung; und
Figur 7    den Ablauf eines Kalibriervorgangs der Druckmesswerte der zweiten Druckmesseinrichtung mittels der Druckmesswerte der ersten Druckmesseinrichtung.

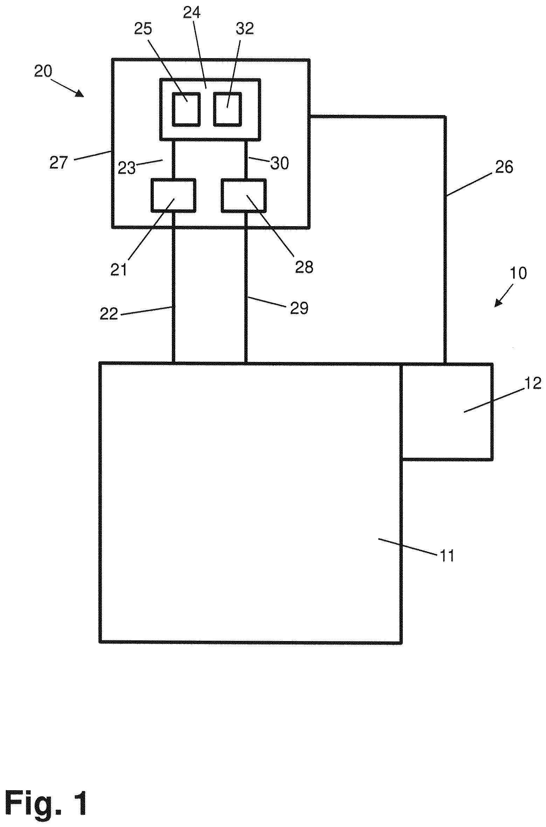

In den Figuren 1 bis 3 ist jeweils in schematischer Form eine Bearbeitungsanlage 10 dargestellt, die über eine Prozesskammer 11 und eine Anlagensteuerung 12 verfügt. Bei der Bearbeitungsanlage 10 handelt es sich beispielsweise um eine Vakuum-Bearbeitungsanlage, die über wenigstens eine Vakuum-Prozesskammer verfügt. Die Bearbeitungsanlage 10 weist weiterhin eine Druckmessvorrichtung 20 auf, die für einen in-situ Betrieb ausgebildet ist. Bei der Druckmessvorrichtung 20 handelt es sich beispielsweise um eine Vakuum-Druckmessvorrichtung. In den gezeigten Ausführungsbeispielen weist die Druckmessvorrichtung 20 ein Gehäuse 27 auf, in dem die einzelnen Komponenten angeordnet sind. Die Druckmessvorrichtung 20 weist eine erste Druckmesseinrichtung 21 in Form eines Gasreibungsmanometers auf, die über eine Leitung 22 in Form eines Druckanschlusses mit der Prozesskammer 11 verbunden ist. Weiterhin weist die Druckmessvorrichtung 20 eine Steuereinrichtung 24 auf, die über eine Kalibriereinrichtung 25, optional eine Einrichtung zur Erzeugung eines elektrischen Signals auf Basis von Druckmesswerten und/oder eine Verstärkereinrichtung zur Verstärkung der bereitgestellten Druckmesssignale verfügt. Zusätzlich weist die Steuereinrichtung 24 eine Speichereinrichtung 32 auf, in der zumindest temporär Druckmesswerte der ersten Druckmesseinrichtung 21 abgespeichert werden. Die erste Druckmesseinrichtung 21 ist über eine Leitung 23 mit der Steuereinrichtung 24 verbunden. Über diese Leitung 23, die eine Signal-Übertragungsleitung ist, werden von der ersten Druckmesseirichtung 21 bereitgestellte Druckmesswerte an die Steuereinrichtung 24 übertragen.

In dem Ausführungsbeispiel der Figur 1 weist die Vakuum-Druckmessvorrichtung 20 eine zweite Druckmesseinrichtung 28 auf, die beispielsweise in Form eines Wärmeleitungs-Vakuummeters ausgebildet ist. Auch die zweite Druckmesseinrichtung 28 ist über eine Leitung 29 in Form eines Druckanschlusses mit der Prozesskammer 11 verbunden. Die zweite Druckmesseinrichtung 28 ist zudem über eine Leitung 30 mit der Steuereinrichtung 24 verbunden. Über diese Leitung 30 werden von der zweiten Druckmesseirichtung 28 bereitgestellte Druckmesswerte an die Steuereinrichtung 24 übertragen.

Die Druckmesswerte werden in der Steuereinrichtung 24 verarbeitet. Die elektrischen Signale werden von der Steuereinrichtung 24 über eine Leitung 26 in Form einer Signalleitung an die Anlagensteuerung 12 übertragen. Auf Basis dieser elektrischen Signale, die den Druck repräsentieren, kann die Anlagensteuerung 11 die Bearbeitungsanlage 10 in geeigneter Weise steuern.

Bei dem in Figur 1 dargestellten Ausführungsbeispiel handelt es sich bei der zweiten Druckmesseinrichtung 28 um einen Bestandteil der Druckmessvorrichtung 20, der ebenfalls innerhalb des Gehäuses 27 angeordnet ist.

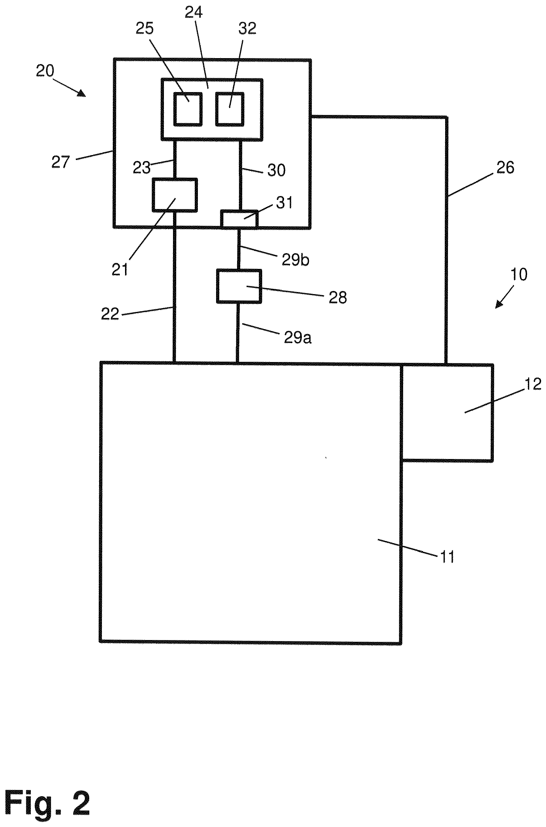

Ein etwas anderes Ausführungsbeispiel ist in Figur 2 dargestellt. Die dort gezeigte Druckmessvorrichtung 20 entspricht in weiten Teilen der Ausführungsform gemäß Figur 1, so dass diesbezüglich auf die entsprechenden Ausführungen verwiesen wird. Auch sind identische Bauteile mit identischen Bezugsziffern versehen.

Im Unterschied zur Figur 1 ist bei dem Ausführungsbeispiel der Figur 2 die zweite Druckmesseinrichtung 28 nicht körperlicher Bestandteil der Druckmessvorrichtung 20, sondern außerhalb des Gehäuses 27 angeordnet und direkt der Prozesskammer 11 zugeordnet. Die Druckmessvorrichtung 20 weist in diesem Fall eine Schnittstelle 31 auf, die über einen Leitungsabschnitt 29b in Form einer Signalleitung mit der zweiten Druckmesseinrichtung 28 verbunden ist. Die zweite Druckmesseinrichtung 28 ist über einen weiteren Leitungsabschnitt 29a, beispielsweise einen Druckanschluss, mit der Prozesskammer 11 verbunden. Weiterhin ist die Schnittstelle 30 über eine Leitung 30 in Form einer Signalleitung mit der Steuereirichtung 24 verbunden. Von der zweiten Druckmesseinrichtung 28 bereitgestellte Druckmesswerte werden über den Leitungsabschnitt 29b zur Schnittstelle 31 und von dort über die Leitung 30 zur Steuereinrichtung 24 übertragen.

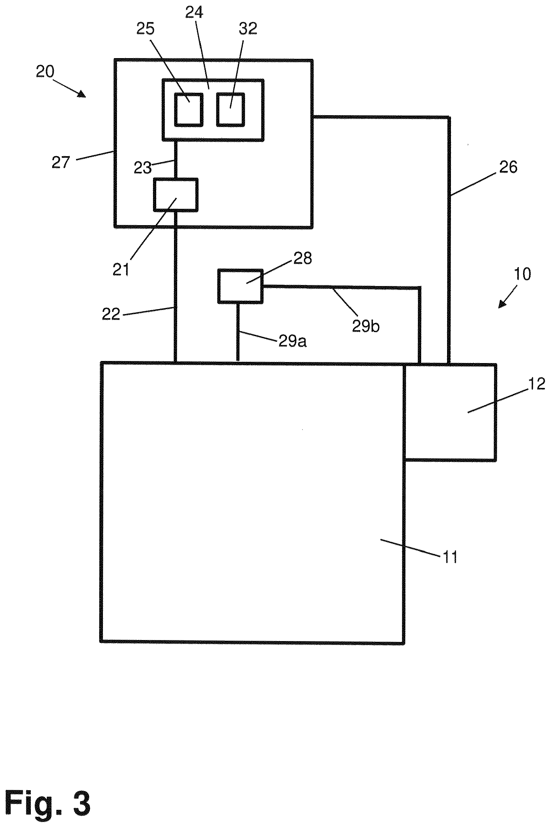

Ein weiteres Ausführungsbeispiel ist in Figur 3 dargestellt. Die dort gezeigte Druckmessvorrichtung 20 entspricht in weiten Teilen den Ausführungsformen gemäß Figuren 1 und 2, so dass diesbezüglich auf die entsprechenden Ausführungen verwiesen wird. Auch sind identische Bauteile mit identischen Bezugsziffern versehen.

Auch bei Figur 3 die zweite Druckmesseinrichtung 28 nicht körperlicher Bestandteil der Druckmessvorrichtung 20, sondern außerhalb des Gehäuses 27 angeordnet, so wie in Figur 2 dargestellt. Die zweite Druckmesseinrichtung 28 hat in diesem Ausführungsbeispiel keinerlei Verbindung zu der im Gehäuse 27 vorgesehenen Steuereinrichtung 24, sondern ist über einen Leitungsabschnitt 29b in Form einer Signalleitung direkt mit der Anlagensteuerung 12 verbunden. Bei diesem Ausführungsbeispiel wird die Steuereinrichtung der Druckmessvorrichtung funktional durch die Steuereinrichtung 24 sowie durch zumindest Bestandteile der Anlagensteuerung 12 gebildet.

Nachfolgend wird die Funktionsweise der Druckmessvorrichtung 20 anhand eines bevorzugten Ausführungsbeispiels gemäß der Figur 1 beschrieben.

Mittels der ersten Druckmesseinrichtung 21 werden erste Druckmesswerte bereitgestellt und an die Steuereinrichtung 24 übertragen. Mittels der zweiten Druckmessvorrichtung 28, die als eine im Vergleich zur ersten Druckmesseinrichtung 21 schnellere und/oder kontinuierliche Druckmesseinrichtung ausgebildet ist, werden zweite Druckmesswerte bereitgestellt und an die Steuereinrichtung 24 übertragen. In der Druckmessvorrichtung 320, insbesondere in der Steuereinrichtung 24, werden die ersten Druckmesswerte der ersten Druckmesseinrichtung 21 und die zweiten Druckmesswerte der zweiten Druckmesseinrichtung 28 zueinander in Bezug gesetzt, insbesondere miteinander kombiniert. Vorzugsweise werden die Druckmesswerte von der ersten Druckmesseinrichtung 21 und von der zweiten Druckmesseinrichtung 28 parallel erfasst und in Überlappung und/oder in Überlagerung gebracht. In der Steuereinrichtung 24 wird auf Basies dieser Druckmesswerte ein elektrisches Signal erzeugt, welches über die Leitung 26 an die Anlagensteuerung 12 überragen wird.

Vorzugsweise können mit der Kalibriereinrichtung 25 die Druckmesswerte der zweiten Druckmesseinrichtung 28 unter Nutzung der Druckmesswerte der ersten Druckmesseinrichtung 21 kalibriert werden. Dies geschieht vorzugsweise wie folgt:

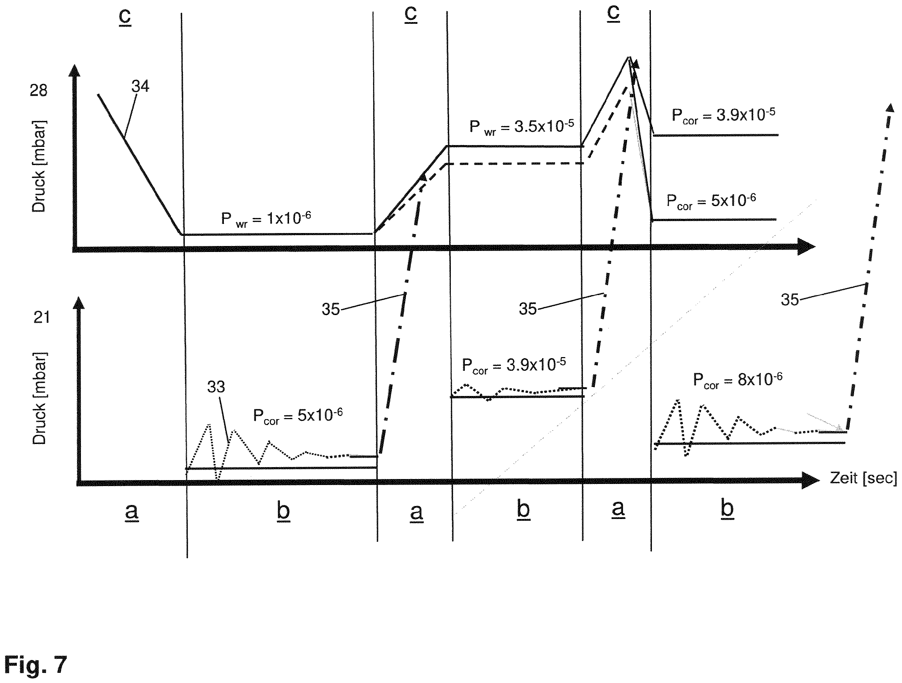

Wird anhand der von der zweiten Druckmesseinrichtung 28 bereitgestellten zweiten Druckmesswerte ein stationärer Druck ermittelt, wird der Druck anhand der von der ersten Druckmesseinrichtung 21 ermittelten ersten Druckmesswerte bestimmt und optional in der Speichereinrichtung 32 abgespeichert. Bei einem stationären, das heißt konstanten Druck, wenn keine Druckänderung vorliegt, führt folglich zwar das Signal der zweiten Druckmessvorrichtung 28, während die erste, langsame, Druckmesseinrichtung 21 ein genaues Druckmesssignal ermittelt und optional abspeichert. Wird anhand der von der zweiten Druckmesseinrichtung 28 bereitgestellten zweiten Druckmesswerte ein sich verändernder Druck ermittelt, werden die zweiten Druckmesswerte der zweiten Druckmesseinrichtung 28 anhand der von der ersten Druckmesseinrichtung 21 ermittelten und optional abgespeicherten ersten Druckmesswerte kalibriert und optional justiert. Bei einer Veränderung des Drucks, bei der nach wie vor das Signal der zweiten Druckmesseinrichtung 28 führt, wird das genaue Druckmesssignal der ersten Druckmesseinrichtung 21, insbesondere nach internen Vorgaben, auf das zweite Druckmesssignal der zweiten Druckmesseinrichtung 28 übertragen und kalibriert dieses, optional mit einer Justierung. Wird erneut dieser Druckwert angefahren, ist dieser nun genauer. Die Kalibrierkurve des ungenaueren und weniger stabilen zweiten Druckmessverfahrens wird somit auf den wahren Druckwert heraufgesetzt beziehungsweise herabgesetzt. Dieser Kalibriervorgang wird weiter unten im Zusammenhang mit der Figur 7 näher beschrieben

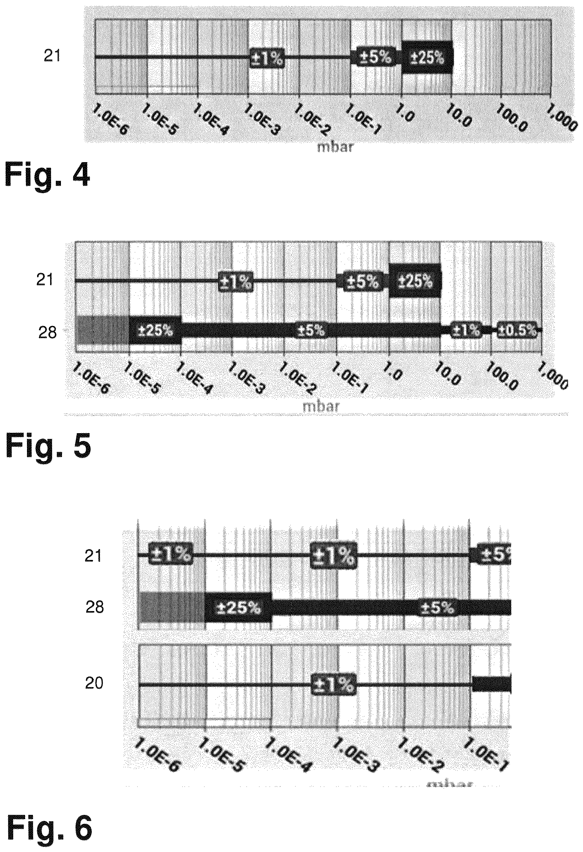

Die erste Druckmesseinrichtung 21 ist erfindungsgemäß in Form eines Gasreibungsmanometers ausgebildet. Die Vorteile einer solchen ersten Druckmesseinrichtung 21 sind insbesondere, dass es sich um eine einzigartige, smarte Technologie handelt, dass eine sehr akkurate Hochvakuum (HV) Messung möglich (0.1 bis 10-7mbar) ist und dass es eine sehr gute Langzeitstabilität gibt. Allerdings ist die Messung diskontinuierlich und relativ langsam. Beispielhafte Charakteristiken einer entsprechenden ersten Druckmesseinrichtung 21 sind in der Figur 4 dargestellt.

Zusammengefasst betrifft die vorliegende Erfindung insbesondere die Kombination einer ersten Druckmesseinrichtung 21, die hochgenau und langzeitstabil, aber diskontinuierlich misst, mit einer zweiten Druckmesseinrichtung 28, die ungenau, aber schnell, und quasi kontinuierlich misst. Es werden zwei sich im Messbereich überlagernde Verfahren kombiniert. Dies ist beispielhaft in Figur 5 dargestellt, in der die erste Druckmesseinrichtung 21 und die zweite Druckmesseinrichtung mit 28 bezeichnet ist.

Die Vorteile der erfindungsgemäßen Lösung ergeben sich auch aus der Figur 6. Dort sind wiederum die erste Druckmesseinrichtung mit 21 und die zweite Druckmesseinrichtung mit 28 bezeichnet. Die Überlagerung beziehungsweise Überlappung ist, da sie das Resultat der erfindungsgemäßen Druckmesseinrichtung ist, in Figur 6 mit 20 bezeichnet.

Wie die zweiten Druckmesswerte der zweiten Druckmesseinrichtung 28 durch die ersten Druckmesswerte der ersten Druckmesseinrichtung 21 kalibriert werden können, wird nun anhand der Figur 7 verdeutlicht. Dort ist jeweils der Druck über die Zeit aufgetragen. Im oberen Bereich von Figur 7 sind die zweiten Druckmesswerte 34 der zweiten Druckmesseinrichtung 28 eingetragen. Im unteren Bereich der Figur 7 sind die ersten Druckmesswerte 33 der ersten Druckmesseinrichtung 21 eigetragen.

Die Druckmessvorrichtung der vorliegenden Erfindung ist in ihrer Gesamtheit ein Kombinationsdruckmessgerät, bei dem die beiden Druckmesswerte 33, 34, die bevorzugt in Form von Signalen vorliegen, beispielsweise per Software, bevorzugt zu einem Signal kombiniert werden. Dies ist exemplarisch durch die Bezugsziffer 35 verdeutlicht, die eine entsprechende Berechnungsprozedur symbolisiert.

Liegt eine Druckveränderung vor, führt das schnelle Signal 34 der zweiten Druckmesseinrichtung 28. Diese Phase ist in der Figur 7 mit dem Buchstaben "c" gekennzeichnet. In dieser Phase beschleunigt die Kugel der als Gasreibungsmanometer ausgebildeten ersten Druckmesseinrichtung 21, was in Figur 7 mit dem Buchstanden "a" gekennzeichnet ist.

Liegt beispielsweise keine Druckveränderung vor, was von der zweiten Druckmesseinrichtung 28 erkannt wird, führt ebenfalls das Signal 34 der zweiten Druckmesseinrichtung 28. In dieser Phase ermittelt die erste Druckmesseinrichtung 21 den ersten, genaueren Dr8uckmesswert 33 und speichert diesen optional in der Speichereinrichtung ab. In einer solchen stationären Druckphase kann nach internen Vorgaben das zweite ungenaue, nicht so langzeitstabile Signal 34 der zweiten Druckmesseinrichtung 28 mittels der Berechnungsprozedur 35 kalibriert werden. Diese Phase ist in der Figur 7 mit dem Buchstaben "b" gekennzeichnet. In der Phase "b" misst die erste Druckmesseinrichtung 21.

Anders ausgedrückt wird der Kalibriervorgang wie folgt realisiert: Wird anhand der von der zweiten Druckmesseinrichtung 28 bereitgestellten zweiten Druckmesswerte 34 ein stationärer Druck ermittelt, wird der Druck anhand der von der ersten Druckmesseinrichtung 21 ermittelten ersten Druckmesswerte 33 bestimmt und optional in einer Speichereinrichtung abgespeichert. Bei einem stationären, das heißt konstanten Druck, wenn keine Druckänderung vorliegt, führt folglich zwar das Signal der zweiten Druckmessvorrichtung 34, während die erste, langsame, Druckmesseinrichtung 33 ein genaues Druckmesssignal ermittelt und optional abspeichert. Wird anhand der von der zweiten Druckmesseinrichtung 28 bereitgestellten zweiten Druckmesswerte 34 ein sich verändernder Druck ermittelt, werden die zweiten Druckmesswerte 34 der zweiten Druckmesseinrichtung 28 anhand der von der ersten Druckmesseinrichtung 21 ermittelten und optional abgespeicherten ersten Druckmesswerte 33 kalibriert und optional justiert, was in Figur 7 durch die Bezugsziffer 35 versinnbildlicht ist. Bei einer Veränderung des Drucks, bei der nach wie vor das Signal der zweiten Druckmesseinrichtung 28 führt, wird das genaue Druckmesssigna 33l der ersten Druckmesseinrichtung 21, insbesondere nach internen Vorgaben, auf das zweite Druckmesssignal 34 der zweiten Druckmesseinrichtung 28 übertragen und kalibriert dieses, optional mit einer Justierung. Wird erneut dieser Druckwert angefahren, ist dieser nun genauer. Die Kalibrierkurve des ungenaueren und weniger stabilen zweiten Druckmessverfahrens wird somit auf den wahren Druckwert heraufgesetzt beziehungsweise herabgesetzt.

Realisiert ist insbesondere die Kombination des Messsignals der ersten Druckmesseinrichtung 21 in Form des Druckmesswerts 33 des Gasreibungsmanometers, mit den Druckmesswert 34 der zweiten Druckmesseinrichtung 28, beispielsweise einer einfachen, aber schnellen, parallel dazu messenden Druckmesseinrichtung 28. Damit können erstmals Messwerte mit hoher Genauigkeit und Langzeitstabilität auch für dynamische Produktionsprozesse zur Verfügung gestellt werden. Die Ausgabe der Druckwerte erfolgt bevorzugt digital, insbesondere nach algorithmisch basierter Softwareberechnung.

In einer bevorzugten Ausführungsform des Messverfahrens kann die erste Druckmesseirichtung 21, das genaue Gasreibungsmanometer, künftig die zweite Druckmesseinrichtung 28, beispielsweise ein schnelles Pirani, insbesondere entsprechend des folgenden Szenarios, kalibrieren:

Ist der Druck konstant, was die zweite Druckmesseinrichtung 28 erkennt, und was in Figur 7 mit "b" gekennzeichnet ist, bestimmt die erste Druckmesseinrichtung 21 den genauen Druck und kalibriert das Signal 34 der zweiten Druckmesseinrichtung 28 , beispielsweise in einem bestimmten Zeitabstand, z.B.10 Sekunden. Mittels der Berechnungsprozedur 35, die vorzugsweise in Form von Programmmitteln umgesetzt ist, wird der von der ersten Druckmesseinrichtung 21 bereitgestellte Druckmesswert 33, welcher dem genauen Druck entspricht, auf den von der zweiten Druckmesseinrichtung 28 bereitgestellten zweiten Druckmesswert 34 übertragen, so dass der zweite Druckmesswert 34 kalibriert und justiert, das heißt entsprechend angepasst werden kann.

Verändert sich der Druck, was ebenfalls die zweite Druckmesseinrichtung 28 erkennt, und was in der Figur 7 mit "c" gekennzeichnet ist, dann führt ebenfalls das schnelle Signal, beispielsweise der Druckmesswert 34 der zweiten Druckmesseinrichtung 28, bis ein weiterer stationärer Zustand erreicht wird und die erste Druckmesseinrichtung 21 wieder "übernimmt". Dieser Vorgang kann sich beliebig oft wiederholen.

In der Figur 7 sind zur Verdeutlichung dieses Vorgangs einige Zahlenbeispiele für die jeweiligen Druckmesswerte angegeben.

In der ersten ganz links dargestellten Phase "a" ändert sich der Druck. Führen tut die zweite Druckmesseinrichtung 28 in Form der Druckmesswerte 34. Dies sind in Figur 7 in Form einer durchgezogenen Linie dargestellt.

In der sich anschließenden ersten stationären Phase "b", stellt die ungenauere zweite Druckmesseinrichtung 28 einen falschen Druckmesswert 34 $P_{wr} = 1 \times 10^{-6}$ mbar bereit. Da sich in der stationären Phase der Druck nicht ändert, stellt auch die erste Druckmesseinrichtung 21 einen Druckmesswert 33 bereit, und zwar den korrekten Druck $P_{corr} = 5 \times 10^{-6}$ mbar. In der Figur ist die Ermittlung und Bereitstellung dieses ersten Druckmesswerts 33 durch eine gepunktete Linie dargestellt.

In einer sich wiederum anschließenden Phase "a" einer Druckveränderung führt weiterhin die zweite Druckmesseinrichtung 28 mit den Druckmesswerten 34. Mittels der Berechnungsprozedur 35 wird aber der von der ersten Druckmesseinrichtung 21 in der stationären Phase zuvor ermittelte korrekte Druckmesswert 33 mit dem Druckmesswert 34 der zweiten Druckmesseinrichtung 28 kombiniert. Daraus ergibt sich für die dann folgende nächste stationäre Phase "b" beispielsweise folgendes: Aufgrund der Ungenauigkeit stellt die zweite Druckmesseinrichtung 28 einen falschen Druckmesswert 34 $P_{wr} = 3,5 \times 10^{-5}$ mbar bereit. Dieser falsche Wert, der in der Figur 7 als gestrichelte Linie markiert ist, wird nun mit dem von der ersten Druckmesseinrichtung 21 zuvor ermittelten genauen Druck kalibriert und justiert, das heißt angepasst. Aufgrund des zuvor von der ersten Druckmesseinrichtung 21 ermittelten Druckmesswerts 33 wurde im Vergleich zu dem von der zweiten Druckmesseinrichtung 28 ursprünglich ermittelten zweiten Druckmesswert 34 eine Druckdifferenz von $4 \times 10^{-6}$ mbar ermittelt. Diese Druckdifferenz wird nun in der Bearbeitungsprozedur 35 auf den von der zweiten Druckmesseinrichtung 28 nunmehr wiederum ungenau ermittelten zweiten Druckmesswert 34 aufgeschlagen, so dass der von der Druckmessvorrichtung bereitgestellte tatsächliche Druck in der nächsten stationären Phase "b" nicht dem von der zweiten Druckmesseinrichtung 28 fälschlicherweise bereitgestellten Druck $P_{wr} = 3,5 \times 10^{-5}$ mbar entspricht, sondern dem um die Druckdifferenz höher liegenden Druck $P_{corr} = 3,9 \times 10^{-5}$ mbar. In der nun herrschenden stationären Phase "b" misst auch wieder die erste Druckmesseinrichtung 21, so dass der Kalibrierungsvorgang erneut durchgeführt wird.

**Bezugszeichenliste**

| | |
|---|---|
| 10 | Bearbeitungsanlage |
| 11 | Prozesskammer |
| 12 | Anlagensteuerung |
| 20 | Druckmessvorrichtung |
| 21 | Erste Druckmesseinrichtung |
| 22 | Leitung |
| 23 | Leitung |
| 24 | Steuereinrichtung |
| 25 | Kalibriereinrichtung |
| 26 | Leitung |
| 27 | Gehäuse |
| 28 | Zweite Druckmesseinrichtung |
| 29 | Leitung |
| 30 | Leitung |
| 31 | Schnittstelle |
| 32 | Speichereinrichtung |
| 33 | Erste Druckmesswerte der ersten Druckmesseinrichtung |
| 34 | Zweite Druckmesswerte der zweiten Druckmesseinrichtung |
| 35 | Berechnungsprozedur |
| a | Erste Druckmesseinrichtung beschleunigt |
| b | Erste Druckmesseinrichtung misst |
| c | Zweite Druckmesseinrichtung führt |

**Patentansprüche**

1. Druckmessvorrichtung (20), mit einer ersten Druckmesseinrichtung (21), die als Gasreibungs-Vakuummeter ausgebildet ist und die konfiguriert ist, um erste Druckmesswerte (33) bereitzustellen, einer zweiten Druckmesseinrichtung (28), die als eine im Vergleich zur ersten Druckmesseinrichtung (21) schnellere und/oder kontinuierliche Druckmesseinrichtung ausgebildet ist und die konfiguriert ist, um zweite Druckmesswerte (34) bereitzustellen, und mit einer Steuereinrichtung (24), die derart bereitgestellt ist, dass sie in der Lage ist, die von der ersten Druckmesseinrichtung (21) bereitgestellten ersten Druckmesswerte (33) und die von der zweiten Druckmesseinrichtung (28) bereitgestellten zweiten Druckmesswerte (34) zueinander in Bezug zu setzen, **dadurch gekennzeichnet, dass** die Steuereinrichtung (24) eine Kalibriereinrichtung (25) aufweist, die derart bereitgestellt ist, dass sie in der Lage ist, die von der zweiten Druckmesseinrichtung (28) bereitgestellten zweiten Druckmesswerte (34) mittels der von der ersten Druckmesseinrichtung (21) bereitgestellten ersten Druckmesswerte (33), insbesondere kontinuierlich, zu kalibrieren und optional zu justieren, und/oder die von der ersten Druckmesseinrichtung (21) bereitgestellten ersten Druckmesswerte (33) mittels der von der zweiten Druckmesseinrichtung (28) bereitgestellten zweiten Druckmesswerte (34), insbesondere kontinuierlich, zu kalibrieren und optional zu justieren.

2. Druckmessvorrichtung nach Anspruch 1, **dadurch gekennzeichnet, dass** diese als Vakuum-Druckmessvorrichtung ausgebildet ist.

3. Druckmessvorrichtung nach Anspruch 1 oder 2, **dadurch gekennzeichnet, dass** die zweite Druckmesseinrichtung (28) als ein Wärmeleitungs-Vakuummeter, insbesondere als ein Pirani-Vakuummeter, oder als eine Ionisations-Druckmesseinrichtung, insbesondere eine Kaltkathodenionisationsdruckmesseinrichtung oder eine Heißkathoden-Ionisationsdruckmesseinrichtung, oder als ein Membran Sensor, insbesondere als CM-Sensor, ausgebildet ist.

4. Druckmessvorrichtung nach einem der Ansprüche 1 bis 3, **dadurch gekennzeichnet, dass** die Druckmessvorrichtung (20), insbesondere die Steuereinrichtung (24), eine Schnittstelle zu einer Anlagensteuerung (12) einer Bearbeitungsanlage (10) aufweist, und dass die Schnittstelle zum Übertragen von Signalen zwischen der Druckmessvorrichtung (20), insbesondere deren Steuereinrichtung (24), und der Anlagensteuerung (12) konfiguriert ist.

5. Druckmessvorrichtung nach einem der Ansprüche 1 bis 4, **dadurch gekennzeichnet, dass** die Steuereinrichtung (24) eine Einrichtung (32) zum Erzeugen elektrischer Signale auf Basis der von der ersten und/oder zweiten Druckmesseinrichtung (21, 28) bereitgestellten Druckmesswerte (33, 34) aufweist, und/oder dass die Steuereinrichtung (24) eine Verstärkereinrichtung zum Verstärken von Signalen auf Basis der von der ersten und/oder zweiten Druckmesseinrichtung (21, 28) bereitgestellten Druckmesswerte (33, 34) aufweist, und/oder dass die Druckmessvorrichtung (20) insbesondere die Steuereinrichtung (24), eine Speichereinrichtung zum Speichern der von der ersten und/oder zweiten Druckmesseinrichtung (21, 28) bereitgestellten Druckmesswerte (33, 34) aufweist.

6. Druckmessvorrichtung nach einem der Ansprüche 1 bis 5, **dadurch gekennzeichnet, dass** die Druckmessvorrichtung (20) für die in-situ Ermittlung eines Prozessdrucks in einer Bearbeitungsanlage (10) konfiguriert ist.

7. Bearbeitungsanlage (10), aufweisend wenigstens eine Prozesskammer (11) sowie eine Anlagensteuerung (12), sowie weiterhin aufweisend eine Druckmessvorrichtung (20) nach einem der Ansprüche 1 bis 6.

8. Bearbeitungsanlage nach Anspruch 7, **dadurch gekennzeichnet, dass** die Bearbeitungsanlage (10) als Vakuum-Bearbeitungsanlage ausgebildet ist, die wenigstens eine Vakuum-Prozesskammer aufweist.

9. Bearbeitungsanlage nach Anspruch 7 oder 8, **dadurch gekennzeichnet, dass** die Anlagensteuerung (12) eine Schnittstelle zu der Druckmessvorrichtung (20) aufweist, die zum Austausch von Signalen zwischen der Anlagensteuerung (12) und der Druckmessvorrichtung (20) konfiguriert ist, oder dass die Druckmessvorrichtung (20) zumindest teilweise Bestandteil der Anlagensteuerung (12) ist.

10. Verfahren zur Druckmessung mittels einer Druckmessvorrichtung (20) gemäß einem der Ansprüche 1 bis 6 **gekennzeichnet durch** folgende Schritte:

mittels einer ersten Druckmesseinrichtung (21), die als Gasreibungsmanometer ausgebildet ist, werden erste Druckmesswerte (33) bereitgestellt;
mittels einer zweiten Druckmessvorrichtung (28), die als eine im Vergleich zur ersten Druckmesseinrichtung (21) schnellere und/oder kontinuierliche Druckmesseinrichtung ausgebildet ist, werden zweite Druckmesswerte (34) bereitgestellt;
in einer Steuereinrichtung (24) der Druckmessvorrichtung (20) werden die ersten Druckmesswerte (33) der ersten Druckmesseinrichtung (21) und die zweiten Druckmesswerte (34) der zweiten Druckmesseinrichtung (28) zueinander in Bezug gesetzt, derart, dass in einer Kalibriereinrichtung (25) der Steuereinrichtung (24) die von der zweiten Druckmesseinrichtung (28) bereitgestellten zweiten Druckmesswerte (34) mittels der von der ersten Druckmesseinrichtung (21) bereitgestellten ersten Druckmesswerte (33), insbesondere kontinuierlich, kalibriert und optional justiert werden, und/oder die von der ersten Druckmesseinrichtung (21) bereitgestellten ersten Druckmesswerte (33) mittels der von der zweiten Druckmesseinrichtung (28) bereitgestellten zweiten Druckmesswerte (34), insbesondere kontinuierlich, kalibriert und optional justiert werden.

11. Verfahren nach Anspruch 10, **dadurch gekennzeichnet, dass** dieses zur Druckmessung in einer Bearbeitungsanlage (10), insbesondere einer Bearbeitungsanlage (10) nach einen der Ansprüche 7 bis 9, ausgebildet ist.

12. Verfahren nach Anspruch 10 oder 11, **dadurch gekennzeichnet, dass** die Druckmesswerte von der ersten Druckmesseinrichtung (21) und von der zweiten Druckmesseinrichtung (28) parallel erfasst werden.

13. Verfahren nach einem der Ansprüche 10 bis 12, **dadurch gekennzeichnet, dass** die von der ersten Druckmesseinrichtung (21) und von der zweiten Druckmesseinrichtung (28) erfassten Druckmesswerte (33, 34) in Überlappung und/oder in Überlagerung gebracht werden.

14. Verfahren nach einem der Ansprüche 10 bis 13, **dadurch gekennzeichnet, dass** die zweite Druckmesseinrichtung (28) das Druckmessverfahren führt.

15. Verfahren nach einem der Ansprüche 10 bis 14, bei dem die von der zweiten Druckmesseinrichtung (28) bereitgestellten zweiten Druckmesswerte (34) mittels der von der ersten Druckmesseinrichtung (21) bereitgestellten ersten Druckmesswerte (33), insbesondere kontinuierlich, kalibriert und optional justiert werden, weiterhin **gekennzeichnet durch** folgende Schritte

wird anhand der von der zweiten Druckmesseinrichtung (28) bereitgestellten zweiten Druckmesswerte (34) ein stationärer Druck ermittelt, wird der Druck anhand der von der ersten Druckmesseinrichtung (21) ermittelten ersten Druckmesswerte (33) bestimmt und optional in einer Speichereinrichtung abgespeichert; wird anhand der von der zweiten Druckmesseinrichtung (28) bereitgestellten zweiten Druckmesswerte (34) ein sich verändernder Druck ermittelt, werden die zweiten Druckmesswerte (34) der zweiten Druckmesseinrichtung (28) anhand der von der ersten Druckmesseinrichtung (21) ermittelten und optional abgespeicherten ersten Druckmesswerte (33) kalibriert und optional justiert.

**Claims**

1. Pressure measurement device (20), having a first pressure measurement apparatus (21) which is designed as a gas friction vacuum meter and which is configured to provide first pressure measurement values (33), a second pressure measurement apparatus (28) which is designed as a faster and/or continuous pressure measurement apparatus compared to the first pressure measurement apparatus (21) and which is configured to provide second pressure measurement values (34), and having a controller (24) provided such that it is capable of relating the first pressure measurement values (33) provided by the first pressure measurement apparatus (21) and the second pressure measurement values (34) provided by the second pressure measurement apparatus (28) to one another, **characterised in that** the controller (24) has a calibration apparatus (25) provided such that it is able to calibrate and optionally adjust, in particular continuously, using the first pressure measurement values (33) provided by the first pressure measurement apparatus (28), the second pressure measurement values (34) provided by the second pressure measurement apparatus (28), and/or to calibrate and optionally adjust, in particular continuously, using the second pressure measurement values (34) provided by the second pressure measurement apparatus (28), the first pressure measurement values (33) provided by the first pressure measurement apparatus (21).

2. Pressure measurement device according to claim 1, **characterised in that** it is designed as a vacuum pressure measurement device.

3. Pressure measurement device according to claim 1 or 2, **characterised in that** the second pressure measurement apparatus (28) is designed as a heat conduction vacuum gauge, in particular as a Pirani vacuum gauge, or as an ionisation pressure measurement apparatus, in particular a cold cathode ionisation pressure measurement apparatus or a hot cathode ionisation pressure measurement apparatus, or as a diaphragm sensor, in particular as a CM sensor.

4. Pressure measurement apparatus according to any one of claims 1 to 3, **characterised in that** the pressure measurement device (20), in particular the controller (24), has an interface to a plant control system (12) of a processing plant (10), and **in that** the interface is configured to transmit signals between the pressure measurement device (20), in particular its controller (24), and the plant control system (12).

5. Pressure measurement device according to any one of claims 1 to 4, **characterised in that** the controller (24) has an apparatus (32) for generating electrical signals on the basis of the pressure measurement values (33, 34) provided by the first and/or second pressure measurement apparatus (21, 28), and/or **in that** the controller (24) has an amplifier apparatus for amplifying signals on the basis of the pressure measurement values (33, 34) provided by the first and/or second pressure measurement apparatus (21, 28), and/or **in that** the pressure measurement device (20), in particular the controller (24), has a memory apparatus for storing the pressure measurement values (33, 34) provided by the first and/or second pressure measurement apparatus (21, 28).

6. Pressure measurement device according to any one of claims 1 to 5, **characterised in that** the pressure measurement device (20) is configured for in-situ determination of a process pressure in a processing plant (10).

7. Processing plant (10), having at least one process chamber (11) and a plant controller (12), and further having a pressure measurement device (20) according to any one of claims 1 to 6.

8. Processing plant according to claim 7, **characterised in that** the processing plant (10) is designed as a vacuum processing plant which has at least one vacuum process chamber.

9. Processing plant according to claim 7 or 8, **characterised in that** the plant control system (12) has an interface to the pressure measurement device (20) which is configured to exchange signals between the plant control system (12) and the pressure measurement device (20), or **in that** the pressure measurement device (20) is at least partially a component of the plant control system (12).

10. Method for measuring pressure by means of a pressure measurement device (20) according to any one of claims 1 to 6, **characterised by** the following steps:

   by means of a first pressure measurement apparatus (21) which is designed as a gas friction manometer, first pressure measurement values (33) are provided;
   by means of a second pressure measurement device (28) which is designed as a faster and/or continuous pressure measurement apparatus compared to the first pressure measurement apparatus (21), second pressure measurement values (34) are provided;
   in a controller (24) of the pressure measurement device (20), the first pressure measurement values (33) of the first pressure measurement apparatus (21) and the second pressure measurement values (34) of the second pressure measurement apparatus (28) are related to one another in such a way that, in a calibration apparatus (25) of the controller (24), the second pressure measurement values (34) provided by the second pressure measurement apparatus (28) are calibrated and optionally adjusted, in particular continuously, using the first pressure measurement values (33) provided by the first pressure measurement apparatus (21), and/or the first pressure measurement values (33) provided by the first pressure measurement apparatus (21) are calibrated and optionally adjusted, in particular continuously, using the second pressure measurement values (34) provided by the second pressure measurement apparatus (28).

11. Method according to claim 10, **characterised in that** said method is designed to measure pressure in a processing plant (10), in particular a processing plant (10) according to any one of claims 7 to 9.

12. Method according to claim 10 or 11, **characterised in that** the pressure measurement values from the first pressure measurement apparatus (21) and from the second pressure measurement apparatus (28) are recorded simultaneously.

13. Method according to any one of claims 10 to 12, **characterised in that** the pressure measurement values (33, 34) recorded by the first pressure measurement apparatus (21) and by the second pressure measurement apparatus (28) are overlapped and/or superimposed.

14. Method according to any one of claims 10 to 13, **characterised in that** the second pressure measurement apparatus (28) guides the pressure measurement method.

15. Method according to any one of claims 10 to 14, in which the second pressure measurement values (34) provided by the second pressure measurement apparatus (28) are calibrated and optionally adjusted, in particular continuously, using the first pressure measurement values (33) provided by the first pressure measurement apparatus (21), further **characterised by** the following steps

   if a stationary pressure is determined on the basis of the second pressure measurement values (34) provided by the second pressure measurement apparatus (28), the pressure is determined on the basis of the first pressure measurement values (33) determined by the first pressure measurement apparatus (21) and is optionally stored in a memory apparatus;
   if a changing pressure is determined on the basis of the second pressure measurement values (34) provided by the second pressure measurement apparatus (28), the second pressure measurement values (34) of the second pressure measurement apparatus (28) are calibrated and optionally adjusted on the basis of the first pressure measurement values (33) determined and optionally stored by the first pressure measurement apparatus (21).

**Revendications**

1.  Appareil de mesure de pression (20), avec un premier dispositif de mesure de pression (21) qui est conçu comme un vacuomètre à frottement de gaz et qui est configuré pour fournir de premières valeurs de mesure de pression (33), un second dispositif de mesure de pression (28) qui est conçu comme un dispositif de mesure de pression plus rapide et/ou continu par rapport au premier dispositif de mesure de pression (21) et qui est configuré pour fournir de secondes valeurs de mesure de pression (34), et avec un dispositif de commande (24) qui est prévu de sorte qu'il est en mesure de mettre en relation les premières valeurs de mesure de pression (33) fournies par le premier dispositif de mesure de pression (21) et les secondes valeurs de mesure de pression (34) fournies par le second dispositif de mesure de pression (28), **caractérisé en ce que** le dispositif de commande (24) présente un dispositif d'étalonnage (25) qui est prévu de sorte qu'il est en mesure d'étalonner et facultativement d'ajuster, en particulier en continu, les secondes valeurs de mesure de pression (34) fournies par le second dispositif de mesure de pression (28) au moyen des premières valeurs de mesure de pression (33) fournies par le premier dispositif de mesure de pression (21) et/ou d'étalonner et facultativement d'ajuster, en particulier en continu, les premières valeurs de mesure de pression (33) fournies par le premier dispositif de mesure de pression (21) au moyen des secondes valeurs de mesure de pression (34) fournies par le second dispositif de mesure de pression (28).

2.  Appareil de mesure de pression selon la revendication 1, **caractérisé en ce qu'**il est conçu comme un appareil de mesure de pression sous vide.

3.  Appareil de mesure de pression selon la revendication 1 ou 2, **caractérisé en ce que** le second dispositif de mesure de pression (28) est conçu comme un vacuomètre à conduction thermique, en particulier comme un vacuomètre Pirani, ou comme un dispositif de mesure de pression à ionisation, en particulier un dispositif de mesure de pression à ionisation à cathode froide ou un dispositif de mesure de pression à ionisation à cathode chaude, ou comme un capteur à membrane, en particulier comme un capteur CM.

4.  Appareil de mesure de pression selon l'une quelconque des revendications 1 à 3, **caractérisé en ce que** l'appareil de mesure de pression (20), en particulier le dispositif de commande (24), présente une interface avec une commande de l'installation (12) d'une installation de traitement (10), et **en ce que** l'interface est configurée pour transmettre des signaux entre l'appareil de mesure de pression (20), en particulier son dispositif de commande (24), et la commande de l'installation (12).

5.  Appareil de mesure de pression selon l'une quelconque des revendications 1 à 4, **caractérisé en ce que** le dispositif de commande (24) comporte un dispositif (32) de génération de signaux électriques sur la base des valeurs de mesure de pression (33, 34) fournies par le premier et/ou le second dispositif de mesure de pression (21, 28), et/ou **en ce que** le dispositif de commande (24) présente un dispositif amplificateur pour amplifier des signaux sur la base des valeurs de mesure de pression (33, 34) fournies par le premier et/ou le second dispositif de mesure de pression (21, 28), et/ou **en ce que** l'appareil de mesure de pression (20), en particulier le dispositif de commande (24), présente un dispositif de stockage pour stocker les valeurs de mesure de pression (33, 34) fournies par le premier et/ou le second dispositif de mesure de pression (21, 28).

6.  Appareil de mesure de pression selon l'une quelconque des revendications 1 à 5, **caractérisé en ce que** l'appareil de mesure de pression (20) est configuré pour la détermination in situ d'une pression de processus dans une installation de traitement (10).

7.  Installation de traitement (10), présentant au moins une chambre de processus (11) ainsi qu'une commande de l'installation (12), et présentant en outre un appareil de mesure de pression (20) selon l'une quelconque des revendications 1 à 6.

8.  Installation de traitement selon la revendication 7, **caractérisée en ce que** l'installation de traitement (10) est conçue comme une installation de traitement sous vide, qui présente au moins une chambre de processus sous vide.

9.  Installation de traitement selon la revendication 7 ou 8, **caractérisée en ce que** la commande de l'installation (12) présente une interface vers l'appareil de mesure de pression (20), qui est configurée pour l'échange de signaux entre la commande d'installation (12) et l'appareil de mesure de pression (20), ou **en ce que** l'appareil de mesure de pression (20) fait au moins partiellement partie de la commande de l'installation (12).

10. Procédé de mesure de pression au moyen d'un appareil de mesure de pression (20) selon l'une quelconque des revendications 1 à 6, **caractérisé par** les étapes suivantes :

> au moyen d'un premier appareil de mesure de pression (21), qui est conçu comme un manomètre à frottement de gaz, de premières valeurs de mesure de pression (33) sont fournies ;
> au moyen d'un second appareil de mesure de pression (28), qui est conçu comme un dispositif de mesure de pression plus rapide et/ou continu par rapport au premier dispositif de mesure de pression (21), de secondes valeurs de mesure de pression (34) sont fournies ;
> dans un dispositif de commande (24) de l'appareil de mesure de pression (20), les premières valeurs de mesure de pression (33) du premier dispositif de mesure de pression (21) et les secondes valeurs de mesure de pression (34) du second dispositif de mesure de pression (28) sont mises en relation les unes avec les autres, de sorte que, dans un dispositif d'étalonnage (25) du dispositif de commande (24), les secondes valeurs de mesure de pression (34) fournies par le second dispositif de mesure de pression (28) sont étalonnées et facultativement ajustées, en particulier en continu, au moyen des premières valeurs de mesure de pression (33) fournies par le premier dispositif de mesure de pression (21) et/ou les premières valeurs de mesure de pression (33) fournies par le premier dispositif de mesure de pression (21) sont étalonnées et facultativement ajustées, en particulier en continu, au moyen des secondes valeurs de mesure de pression (34) fournies par le second dispositif de mesure de pression (28).

11. Procédé selon la revendication 10, **caractérisé en ce qu'**il est conçu pour mesurer la pression dans une installation de traitement (10), en particulier une installation de traitement (10) selon l'une quelconque des revendications 7 à 9.

12. Procédé selon la revendication 10 ou 11, **caractérisé en ce que** les valeurs de pression mesurées par le premier dispositif de mesure de pression (21) et par le second dispositif de mesure de pression (28) sont enregistrées en parallèle.

13. Procédé selon l'une quelconque des revendications 10 à 12, **caractérisé en ce que** les valeurs de mesure de pression (33, 34) enregistrées par le premier dispositif de mesure de pression (21) et par le dispositif de mesure de pression (28) se chevauchent ou se superposent.

14. Procédé selon l'une quelconque des revendications 10 à 13, **caractérisé en ce que** le second appareil de mesure de pression (28) conduit le procédé de mesure de pression.

15. Procédé selon l'une quelconque des revendications 10 à 14, dans lequel les secondes valeurs de mesure de pression (34) fournies par le second dispositif de mesure de pression (28) sont étalonnées et facultativement ajustées, en particulier en continu, au moyen des premières valeurs de mesure de pression (33) fournies par le premier dispositif de mesure de pression (21), **caractérisé en outre par** les étapes suivantes

> si une pression stationnaire est déterminée à l'aide des secondes valeurs de mesure de pression (34) fournies par le second dispositif de mesure de pression (28), la pression est déterminée à l'aide des premières valeurs de mesure de pression (33) déterminées par le premier dispositif de mesure de pression (21) et est facultativement stockée dans un dispositif de stockage ;
> si une pression variable est déterminée à l'aide des secondes valeurs de mesure de pression (34) fournies par le second dispositif de mesure de pression (28), les secondes valeurs de mesure de pression (34) du second dispositif de mesure de pression (28) sont étalonnées et facultativement ajustées à l'aide des premières valeurs de mesure de pression (33) déterminées et facultativement stockées par le premier dispositif de mesure de pression (21).

**Fig. 1**

# Fig. 2

# Fig. 3

Fig. 4

Fig. 5

Fig. 6

Fig. 7

EP 3 760 995 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0379841 A2